# EUROPEAN PATENT APPLICATION

(11) **EP 4 852 160 A1**
(43) Date of publication of application: **09.12.2026**
(21) Application number: 25731939.2
(22) Date of filing: 23.01.2025
(51) Int. Cl.: H01M 50/105, H01M 10/613, H01M 10/647, H01M 50/133, H01M 50/184, H01M 50/186

(54) **POUCH BATTERY CELL, BATTERY APPARATUS, ENERGY STORAGE APPARATUS AND ELECTRICAL APPARATUS**

(71) Applicant: Contemporary Amperex Technology (Hong Kong) Limited, Central, Hong Kong (HK)
(72) Inventor: WANG, Yalei, Ningde, Fujian 352100 (CN); WANG, Liangyi, Ningde, Fujian 352100 (CN); ZHOU, Huiping, Ningde, Fujian 352100 (CN); QIN, Feng, Ningde, Fujian 352100 (CN); WANG, Peng, Ningde, Fujian 352100 (CN)
(74) Representative: Gong, Jinping
(86) International application number: PCT/CN2025/074344
(87) International publication number: WO 2026/156604

(57) **Abstract**

Provided are a pouch battery cell (10) and a battery device (100), an energy storage device, and an electric device (1000). The pouch battery cell (10) includes: a film shell (11), where a wall thickness of the film shell (11) is less than or equal to 0.2 mm, the film shell (11) includes two film parts (111) connected in a first direction, both of the film parts (111) define an accommodating groove, and the accommodating grooves of the two film parts (111) are formed opposite to each other in the first direction and jointly form an accommodating cavity of the film shell (11); and an electrode assembly, arranged in the accommodating cavity, where a dimension of the pouch battery cell (10) in the first direction is a first dimension, and a dimension of any of the film parts (111) in the first direction is a second dimension, the first dimension being greater than or equal to 5 mm and less than or equal to 70 mm, and a ratio of the second dimension to the first dimension is greater than or equal to 0.4 and less than or equal to 0.6.

## Description

### TECHNICAL FIELD

The present application relates to the technical field of batteries, and in particular, to a pouch battery cell and a battery device, an energy storage device, and an electric device.

### BACKGROUND

With the development of scientific technology, the requirements for the capacity of electric devices such as vehicles on battery devices are higher and higher. When the battery device adopts pouch batteries, the energy density of pouch battery cells is lower, which makes the energy density of the battery device lower.

### SUMMARY

The present application aims to solve at least one of the technical problems existing in the prior art. To this end, the present application provides a pouch battery cell. The pouch battery cell can well increase the energy density, such that the overall energy density of a battery device can be well increased, thereby enabling the battery device to better satisfy use requirements.

The present application further provides a battery device with the pouch battery cell described above.

The present application further provides an energy storage device with the battery device described above.

The present application further provides an electric device with the battery device or the energy storage device described above.

Provided is a pouch battery cell according to a first aspect of the present application, which includes: a film shell, where a wall thickness of the film shell is less than or equal to 0.2 mm, the film shell includes two film parts connected in a first direction, both of the film parts define an accommodating groove, and the accommodating grooves of the two film parts are formed opposite to each other in the first direction and jointly form an accommodating cavity of the film shell; and an electrode assembly, arranged in the accommodating cavity, where a dimension of the pouch battery cell in the first direction is a first dimension, and a dimension of any of the film parts in the first direction is a second dimension, the first dimension being greater than or equal to 5 mm and less than or equal to 70 mm, and a ratio of the second dimension to the first dimension is greater than or equal to 0.4 and less than or equal to 0.6.

According to the pouch battery cell of the present application, the thickness of the film shell is set to be less than 0.2 mm, and the first dimension is greater than or equal to 5 mm and less than or equal to 70 mm, such that the pouch battery cell has a larger thickness and the wall thickness of the film shell is smaller, thereby enabling the pouch battery cell to have a higher energy density. Meanwhile, the ratio of the second dimension of any film part to the first dimension is greater than or equal to 0.4 and less than or equal to 0.6, such that the two film parts of the film shell have similar or same dimension structure and structural performance, so as to enable the two film parts to have more balanced bearing capacity for stress and the like generated in the accommodating cavity, and make the overall structure of the film shell more stable and the structural performance such as mechanical strength better. This can ensure that the film shell can well satisfy the supporting and protecting requirements of the pouch battery cell under the condition that the wall thickness is less than or equal to 0.2 mm, such that the energy density of the pouch battery cell can be stably and reliably increased, further reducing the arrangement number of structural components of support, heat conduction and the like in the battery device, and enlarging the arrangement space of the pouch battery cells in the battery device, thereby well increasing the overall energy density of the battery device.

In some embodiments of the present application, the ratio of the second dimension to the first dimension is greater than or equal to 0.45 and less than or equal to 0.55.

In this embodiment, by setting the ratio of the second dimension to the first dimension to be greater than or equal to 0.45 and less than or equal to 0.55, the dimensions of the two film parts in the first direction are more consistent, which is convenient for processing and manufacturing. Moreover, the accommodating grooves of the two film parts can have sufficient depth to facilitate the arrangement of the electrode assembly, and the two film parts can maintain relatively consistent mechanical strength, such that the overall structure of the film shell is more stable and reliable, thereby making the operation and use of the pouch battery cell stable and reliable.

In an embodiment of the present application, the ratio of the second dimension to the first dimension is 0.5.

In this embodiment, by setting the ratio of the second dimension to the first dimension to 0.5, the two film parts may have the same structural configurations, such that the processing and molding of the film shell are facilitated, and moreover, the two film parts may have the same mechanical strength and structural performance, such that the overall structural stability and reliability of the film shell are better, thereby making the operation of the pouch battery cell more stable.

In some embodiments of the present application, the first dimension is greater than or equal to 15 mm and less than or equal to 45 mm.

In this embodiment, by setting the first dimension to be greater than or equal to 15 mm and less than or equal to 45 mm, the pouch battery cell has a larger thickness, such that the energy density of the battery device can be well increased, and moreover, reducing the probability of reduced structural stability of the pouch battery cell caused by the excessive thickness of the pouch battery cell can make the pouch battery cell has an appropriate thickness to operate stably and reliably.

In some embodiments of the present application, the second dimension is greater than or equal to 3 mm and less than or equal to 35 mm.

In this embodiment, by setting the second dimension to be greater than or equal to 3 mm and less than or equal to 35 mm, the two film parts may jointly form a film shell with the required thickness of the pouch battery, thus satisfying the setting requirements of the pouch battery cell.

In an embodiment of the present application, the second dimension is greater than or equal to 7 mm and less than or equal to 22 mm.

In this embodiment, by setting the second dimension to be greater than or equal to 7 mm and less than or equal to 22 mm, the film parts may have a more suitable dimension in the first direction, such that the film parts can have good mechanical strength and structural stability, thereby making the overall structure of the film shell more stable and reliable. This can ensure that the electrode assembly can be disposed in the accommodating cavity reliably and steadily, thus making the operation of the pouch battery cell more stable.

In some embodiments of the present application, the film part includes: a sealing edge, a side wall and a bottom wall, where the sealing edge and the bottom wall are arranged at an interval in the first direction, the side wall extends in an annular shape along a circumferential direction of the bottom wall, one end of the side wall in the first direction is connected to a peripheral edge of the bottom wall and the other end extends to be connected to the sealing edge in the first direction, the sealing edge, the side wall and the bottom wall jointly enclose an accommodating groove opening on one side in the first direction, and the electrode assembly is at least partially arranged in the accommodating groove.

In this embodiment, the film part includes a sealing edge, a side wall and a bottom wall, and the structure is simple, which can well satisfy the molding requirements of the accommodating groove and the accommodating cavity, such that the processing of the film shell can be smoothly carried out and satisfy the processing and manufacturing requirements of the pouch battery cell.

In an embodiment of the present application, the side wall includes a first arc segment, a straight line segment and a second arc segment sequentially connected in the first direction, where the straight line segment extends along a straight line in the first direction, the straight line segment is arc-connected with the sealing edge through the first arc segment, and the straight line segment is arc-connected with the bottom wall through the second arc segment.

In this embodiment, setting the straight line segment of the side wall to extend in the first direction can play a good guiding role in the mobile assembly of the electrode assembly, and facilitate the arrangement of the electrode assembly in the accommodating groove, such that the space of the accommodating groove can be fully utilized, and moreover, the first arc segment and the second arc segment can cooperate with the first straight line segment to play a good guiding role, thus reducing the probability of frictional damage when the electrode assembly is loaded into the accommodating groove, and enabling the assembled pouch battery cell to operate stably.

In some examples of the present application, a dimension of the straight line segment in the first direction is a third dimension, and a ratio of the third dimension to the second dimension is greater than or equal to 0.6 and less than or equal to 0.9.

In this embodiment, by setting the ratio of the third dimension of the straight line segment in the first direction to the second dimension to be greater than or equal to 0.6 and less than or equal to 0.9, the accommodating space enclosed by the side wall of the straight line segment in the first direction occupies a larger proportion of the space of the accommodating groove, such that the space in the accommodating groove can be more fully utilized when the electrode assembly is arranged in the accommodating groove, and the arrangement of the electrode assembly and the film shell can be more compact, thereby further increasing the energy density of the pouch battery cell to a certain extent.

In an example of the present application, a ratio of the third dimension to the second dimension is greater than or equal to 0.7 and less than or equal to 0.85.

In this embodiment, by setting the ratio of the third dimension to the second dimension to be greater than or equal to 0.7 and less than or equal to 0.85, the accommodating groove has a larger accommodating space enclosed by the straight line segment in the first direction, such that the space of the accommodating groove can be fully utilized, and moreover, the first arc segment and the second arc segment form a good and smooth transition segment between the straight line segment, the sealing edge and the bottom wall, such that the electrode assembly and the film shell can be assembled smoothly and conveniently.

In some examples of the present application, a dimension of the straight line segment in the first direction is a third dimension, and the third dimension is greater than or equal to 5 mm and less than or equal to 30 mm.

In this embodiment, by setting the third dimension of the straight line segment in the first direction to be greater than or equal to 5 mm and less than or equal to 30 mm, the setting requirements of the pouch battery cells with different thicknesses can be satisfied, such that the dimension of the film shell jointly formed by the two film parts in the first direction can satisfy the thickness requirements of the battery cells.

In an example of the present application, the third dimension is greater than or equal to 7 mm and less than or equal to 18 mm.

In this embodiment, by further defining the third dimension as greater than or equal to 7 mm and less than or equal to 18 mm, the thickness of the film shell may be in a more appropriate range, thereby satisfying the requirements of the thickness of the pouch battery cells.

In some examples of the present application, a radius of the first arc segment is greater than or equal to 1.5 mm, and a radius of the second arc segment is greater than or equal to 1.5 mm.

In this embodiment, by setting the radius of the first arc segment to be greater than or equal to 1.5 mm and the radius of the second arc segment to be greater than or equal to 1.5 mm, the transition arc segments with a sufficient dimension may be formed between the straight line segment and the sealing edge and between the straight line segment and the bottom wall, such that the connection between the straight line segment and the bottom wall and the sealing edge can be more stable and reliable, and the first arc segment and the second arc segment can play a better guiding role.

In some embodiments of the present application, a width dimension of the pouch battery cell in a second direction is less than or equal to 200 mm, and/or a length dimension of the pouch battery cell in a third direction is less than or equal to 650 mm, the third direction intersecting both the second direction and the first direction.

In this embodiment, by setting the width dimension of the pouch battery cell in the second direction to be less than or equal to 200 mm and the length dimension of the pouch battery cell in the third direction to be less than or equal to 650 mm, the pouch battery cell may have a smaller layout space in the second direction and the overall structure remains stable while satisfying the energy density requirements of the battery device, thus facilitating the arrangement of the battery device and making the operation more stable.

In some embodiments of the present application, a sealing edge boss is formed on an end surface of at least one end of the film shell in a second direction, and the sealing edge boss is configured to be formed by folding sealing edges of the two film parts, the second direction intersecting the first direction.

In this embodiment, by forming the sealing edge boss on an end surface of at least one end of the film shell in the second direction, the space occupied by the sealing edge in the second direction and the interference to the arrangement of the pouch battery cells can be well reduced, which makes the overall dimension of the pouch battery cells in the second direction smaller, thereby facilitating the arrangement of the pouch battery cells in the battery device, and moreover, the sealing edge boss can promote the sealing reliability of the accommodating cavity to a certain extent, thus making the pouch battery cell have a more stable sealing effect.

In an embodiment of the present application, a bulge height of the sealing edge boss in the second direction is less than or equal to 0.5 mm.

In this embodiment, by setting the bulge height of the sealing edge boss in the second direction to be less than or equal to 0.5 mm, the bulge dimension of the sealing edge boss on the pouch battery cell is very small, such that one end of the pouch battery cell with the sealing edge boss in the second direction can still conveniently cooperate the assembly of supporting, fixing, and other structures, thereby making the assembly of the pouch battery cells in the battery device more convenient and easier.

In some embodiments of the present application, both ends of the pouch battery cell in the third direction are respectively provided with conductive members, and the conductive members are electrically connected with the electrode assembly and are at least partially exposed outside the film shell, the third direction intersecting the first direction.

In this embodiment, both ends of the pouch battery cell in the third direction are respectively provided with the conductive members, the conductive members are electrically connected with the electrode assembly, and the structure is simple, which can well satisfy the use requirements of the pouch battery cells.

In an embodiment of the present application, a part of the conductive member exposed outside the film shell is a lead-out part, and the lead-out part is formed in a sheet shape.

In this embodiment, by setting the lead-out part to be in a sheet shape, the lead-out part may have a larger electric connection surface, such that the lead-out part can be conveniently and reliably electrically connected with other electric connectors or conductive members.

In some examples of the present application, rounded corners are respectively formed on end surfaces of both sides of the lead-out part in the second direction and an end surface of the lead-out part at one end facing away from the electrode assembly in the third direction.

In this embodiment, the rounded corners are respectively formed on the end surfaces of both sides of the lead-out part in the second direction and the end surface of the lead-out part at one end facing away from the electrode assembly in the third direction, such that the stress on the lead-out part can be well dispersed, and the risks of scratch of the pouch battery cells and scratch of operators and the like caused by sharp edges of the lead-out part can be reduced, thereby making the electric connection operation of the lead-out part more convenient and stable.

In an embodiment of the present application, the part of the conductive member exposed outside the film shell is the lead-out part, and the lead-out part is of a flexible structure.

In this embodiment, by setting the lead-out part to be of a flexible structure, the electric connection of the lead-out part can be more convenient, such that the lead-out part can better adapt to the electric connection requirements of different angles and directions, thereby making the electric connection between the pouch battery cell and other pouch battery cells or external circuits or the like more convenient and reliable.

In an embodiment of the present application, the part of the conductive member exposed outside the film shell is the lead-out part, and the thickness of the lead-out part is 0.1 mm to 0.5 mm.

In this embodiment, by setting the thickness of the lead-out part to be 0.1 mm to 0.5 mm, the lead-out part may have enough current passage area to satisfy the requirements of electric connection, and the lead-out part may have enough mechanical strength to stably and reliably carry out electric connection, and the probability of the problems of inconvenient connection, cost increase and the like caused by the excessive thickness of the lead-out part is reduced, thereby making the electric connection of the lead-out part stable and convenient.

In an embodiment of the present application, the part of the conductive member exposed outside the film shell is the lead-out part, and a width dimension of the lead-out part in the second direction is 20 mm to 60 mm.

In this embodiment, by setting the width dimension of the lead-out part in the second direction to be 20 mm to 60 mm, the lead-out part may have a sufficient dimension in the second direction to conveniently carry out the electric connection operation, and the probability of inconvenience of electric connection operation caused by the fact that the lead-out part is too wide and is not easy to bend is reduced, thereby making the electric connection of the lead-out part flexible and convenient.

In an embodiment of the present application, the part of the conductive member exposed outside the film shell is the lead-out part, and a length dimension of the lead-out part in the third direction is 10 mm to 50 mm.

In this embodiment, by setting the length dimension of the lead-out part in the third direction to be greater than or equal to 10 mm, the lead-out part may have a sufficient length to be electrically connected, and by setting the length dimension of the lead-out part in the third direction to be less than or equal to 50 mm, the cost increase and the space occupation caused by the overlong lead-out part can be reduced, thereby making the whole structure of the pouch battery cell relatively compact.

Provided is a battery device according to a second aspect of the present application, which includes battery cell sets, where each battery cell set includes a plurality of the pouch battery cells stacked in the first direction, and the pouch battery cells are the pouch battery cell according to the first aspect of the present application.

According to the battery device of the present application, by arranging the pouch battery cell of the first aspect, and by setting the thickness of the film shell to be less than 0.2 mm and the first dimension to be greater than or equal to 5 mm and less than or equal to 70 mm, the pouch battery cell has a larger thickness and the wall thickness of the film shell is smaller, thereby enabling the pouch battery cell to have a higher energy density. Meanwhile, the ratio of the second dimension of any film part to the first dimension is greater than or equal to 0.4 and less than or equal to 0.6, such that the two film parts of the film shell have similar or same dimension structure and structural performance, so as to enable the two film parts to have more balanced bearing capacity for stress and the like generated in the accommodating cavity, and make the overall structure of the film shell more stable and the structural performance such as mechanical strength better. This can ensure that the film shell can well satisfy the supporting and protecting requirements of the pouch battery cell under the condition that the wall thickness is less than or equal to 0.2 mm, such that the energy density of the pouch battery cell can be stably and reliably increased, further reducing the arrangement number of structural components of support, heat conduction and the like in the battery device, and enlarging the arrangement space of the pouch battery cells in the battery device, thereby well increasing the overall energy density of the battery device.

In some embodiments of the present application, the battery device further includes: a heat exchange plate, the heat exchange plate being arranged on at least one side of the plurality of pouch battery cells in the second direction, and being configured to exchange heat with the plurality of pouch battery cells, the second direction intersecting the first direction.

In this embodiment, by arranging the heat exchange plate, the heat exchange plate is arranged on at least one side of the plurality of pouch battery cells in the second direction, the structure is simple and the arrangement is reasonable, which makes the heat exchange plate conveniently exchange heat with the plurality of pouch battery cells, such that the battery cell set can obtain a good heat exchange effect, and the battery cell set can operate reliably and stably, thereby making the operation of the battery device more stable.

In an embodiment of the present application, a surface of the film shell on one side facing the heat exchange plate in the second direction is planar and is connected to the heat exchange plate by a heat conduction adhesive or a heat conduction pad.

In this embodiment, by setting a surface of the film shell on one side facing the heat exchange plate to be planar, the structure is simple, which can make the film shell and the heat exchange plate have a stable mating contact surface, such that the film shell can be stably and reliably fixed to the heat exchange plate by a heat conduction adhesive or a heat conduction pad, thereby making the assembly and fixation of the pouch battery cell on the heat exchange plate more convenient and stable, and making the assembly and fixation of the battery cell set and the heat exchange plate more reliable.

In an embodiment of the present application, the sealing edge boss is formed on one side of the film shell in the second direction, and the battery device further includes: an adhesive layer, the adhesive layer being adhesively connected between the heat exchange plate and the pouch battery cells, where in the second direction, a height of the adhesive layer is greater than the bulge height of the sealing edge boss.

In this embodiment, one side of the film shell with the sealing edge boss is adhesively connected with the heat exchange plate through the adhesive layer, and the height of the adhesive layer is greater than the bulge height of the sealing edge boss, such that the adhesive layer can fully cover the gap between the end surface of the film shell and the heat exchange plate, and the film shell can be adhesively connected and fixed to the heat exchange plate through the adhesive layer reliably and stably, thereby making the assembly and fixation of the battery cell set to the heat exchange plate reliable and stable.

In an embodiment of the present application, the battery device further includes: the adhesive layer, the adhesive layer being adhesively connected between the heat exchange plate and the pouch battery cells, and a part of the adhesive layer being configured to overflow between two adjacent pouch battery cells in the first direction to adhesively connect the two adjacent pouch battery cells.

In this embodiment, a part of the adhesive layer is configured to overflow between two adjacent pouch battery cells in the first direction, such that the two adjacent pouch battery cells can be better connected and fixed at one end facing the heat exchange plate, the overall arrangement of a plurality of pouch battery cells in the battery cell set is more stable, and the adhesive connection area between the pouch battery cells and the heat exchange plate through the adhesive layer is well increased, thus making the adhesive connection and fixation between the pouch battery cells and the heat exchange plate more stable and reliable, thereby making the fixation between the battery cell set and the heat exchange plate more stable and reliable.

In some embodiments of the present application, the battery device further includes a bottom plate and an adhesive layer, the bottom plate is located on one side of the battery cell set in the second direction, the battery cell set is adhesively connected with the bottom plate through the adhesive layer, a surface of the pouch battery cell on one side facing the adhesive layer is a first surface, two side surfaces of the pouch battery cell in the first direction are both second surfaces, and the first surface is in chamfer connection to the two second surfaces; where the battery device further includes blocking members, each blocking member is arranged at a chamfer, and the blocking member is configured to block the adhesive layer located at the chamfer from overflowing to a position where the second surface is located.

In this embodiment, by arranging the blocking member at the chamfer to block the overflow of the adhesive layer towards the position where the second surface is located, the probability that the colloid in the adhesive layer overflows between the second surfaces of the adjacent pouch battery cells when the battery cell set and the bottom plate are adhesively connected and assembled by the adhesive layer can be well reduced, thereby well reducing the risk of damage to the pouch battery cells caused by stress concentration caused by the overflowing colloid, and enabling the pouch battery cells to maintain a stable structural state and service life.

In an embodiment of the present application, one blocking member is arranged between two adjacent pouch battery cells in the first direction.

In this embodiment, by arranging one blocking member between two adjacent pouch battery cells, the blocking member is convenient to arrange, and the use quantity of the blocking members is less, thereby reducing the cost of the battery device to a certain extent.

In an embodiment of the present application, the blocking member is a foam member and is adhesively connected to the bottom plate.

In this embodiment, by setting the blocking member as a foam member and to be adhesively connected to the bottom plate, the structure is simple, such that the blocking member can be conveniently arranged at the chamfer and stably separate the overflowing colloid of the adhesive layer, thereby facilitating the assembly.

In an embodiment of the present application, the blocking member is an adhesive member, and the adhesive member is adhesively connected to one end of the pouch battery cell facing the bottom plate.

In this embodiment, by setting the blocking member as an adhesive member, the structure is simple, which can well satisfy the use requirements, thereby making the assembly and fixation between the blocking member and the pouch battery cells more convenient.

In some embodiments of the present application, the plurality of pouch battery cells are disposed in a stacked manner in the first direction, and the battery device further includes partition plates, a hardness of the partition plates is higher than a hardness of the film shell, a plurality of the partition plates are provided, the plurality of partition plates are disposed at intervals in the first direction, and at least two of the pouch battery cells are disposed between two adjacent partition plates.

In this embodiment, by disposing the plurality of partition plates at intervals in the first direction, setting the hardness of the partition plate to be greater than the hardness of the film shell, and arranging at least two pouch battery cells between two adjacent partition plates, the plurality of pouch battery cells in the battery cell set can be stably and reliably supported by the partition plates in the first direction, such that the overall structure of the battery cell set is more stable, and the arrangement number of the partition plates can be reduced, thereby making the battery device maintain a high energy density.

In an embodiment of the present application, the number of the pouch battery cells sequentially disposed between two adjacent partition plates in the first direction is less than or equal to four.

In this embodiment, by setting the number of the pouch battery cells between two adjacent partition plates to be less than or equal to four, the arrangement number of the pouch battery cells between two adjacent partition plates is appropriate, such that each pouch battery cell between two partition plates can be stably and effectively supported by the two partition plates, thereby reducing the probability that the number of the pouch battery cells between two partition plates exceeds the supporting capacity of the partition plates. This can ensure that a plurality of partition plates can stably and reliably support each pouch battery cell in the battery cell set, and the overall structural stability of the battery cell set is better.

In an embodiment of the present application, the pouch battery cells extend in the third direction, the third direction is a length direction of the pouch battery cell, a length direction of the partition plate extends in the length direction of the pouch battery cell, and a length of the partition plate is greater than 80% of a length of the pouch battery cell.

In this embodiment, by setting the length of the partition plate to be greater than 80% of the length of the pouch battery cell, the pouch battery cells and the partition plate may have a larger mating support surface, such that the partition plates can cover most or all of the extension range of the pouch battery cells in the third direction. This can ensure that the partition plate can play a good role in supporting and separating the pouch battery cells.

In an embodiment of the present application, a plurality of the battery cell sets are provided, and at least two of the battery cell sets are disposed in the third direction, and the length of the partition plate is more than twice the length of the pouch battery cell, such that two adjacent battery cell sets disposed in the length direction of the pouch battery cells share one partition plate.

In this embodiment, by providing a plurality of the battery cell sets and disposing the plurality of battery cell sets in the third direction, the structure is simple and the arrangement is reasonable, such that the use requirements of the battery device can be well satisfied. By setting the length of the partition plate to be more than twice the length of the pouch battery cell, the partition plate may support at least two adjacent pouch battery cells simultaneously, such that the arrangement number of the partition plates can be reduced, and the positioning of a plurality of battery cell sets during arrangement is more convenient and the arrangement is more consistent, thereby improving the assembly efficiency of the battery device to a certain extent.

In an embodiment of the present application, a thickness of the partition plate in the first direction is less than the thickness of the pouch battery cell, and a width of the partition plate in the second direction is greater than 80% of a width of the pouch battery cell.

In this embodiment, by setting the width of the partition plate to be greater than 80% of the width of the pouch battery cell, the pouch battery cells and the partition plate may form a larger support-matching area, such that the partition plate can cover most of the surface of one side of the pouch battery cell in the first direction. This can ensure that the partition plate can play a good role in supporting and separating the pouch battery cells.

In an embodiment of the present application, the thickness of the partition plate in the first direction is 0.8 mm to 2.0 mm.

In this embodiment, by setting the thickness of the partition plate to be greater than or equal to 0.8 mm, the partition plate may have good structural strength to support the pouch battery cells stably and reliably, and by setting the thickness of the partition plate to be less than or equal to 2 mm, the partition plate is thinner under the condition of satisfying the supporting requirements, thereby reducing the space occupied by the partition plates in the battery device and further enabling the battery device to have a higher energy density.

In an embodiment of the present application, the partition plate is an aluminum plate, an aluminum alloy plate, a copper plate, or a steel plate.

In this embodiment, by setting the partition plate as an aluminum plate, an aluminum alloy plate, a copper plate, or a steel plate, the partition plate may have good mechanical strength, such that the partition plate can satisfy the supporting requirements well, and the partition plate can have a good heat conduction effect, thereby making the pouch battery cells in the battery cell set exchange heat through the partition plates, and enabling the battery cell set to obtain a better heat exchange effect.

In an embodiment of the present application, the partition plate is of a solid structure.

In this embodiment, by setting the partition plate to be of a solid structure, the partition plate may have good mechanical strength and support reliability, such that the plurality of pouch battery cells in the battery cell set can be supported more stably and reliably.

In an embodiment of the present application, the partition plate is a heat conducting member and is thermally connected to the film shell.

In this embodiment, by setting the partition plate as a heat conducting member and to be thermally connected to the film shell, the partition plate may play a good heat exchange role for the pouch battery cell, such that the pouch battery cell can exchange heat through the partition plate in the first direction, thereby enabling the battery cell set to obtain a better heat exchange effect, and enabling the battery device to have better thermal management performance.

In an embodiment of the present application, a heat exchange flow channel is formed in the partition plate.

In this embodiment, by forming the heat exchange flow channel in the partition plate, the partition plate may be used as a liquid cooling plate to perform efficient heat exchange operation on the pouch battery cell, such that the heat exchange effect of the partition plate on the pouch battery cell in the first direction can be greatly improved, thereby enabling the battery cell set to obtain a better heat exchange effect, and enabling the battery device to have better thermal management performance; moreover, the partition plate integrates the liquid cooling heat exchange function, such that additional heat exchange structures are reduced, and under the condition of improving the heat exchange effect, the number of structural parts of non-pouch battery cells in the battery device is less, thereby making the arrangement of the battery cell sets in the battery device more compact, and enabling the battery device to maintain a higher energy density.

In an embodiment of the present application, the partition plate is adhesively connected to the adjacent pouch battery cells.

In this embodiment, by adhesively connecting the partition plate to the adjacent pouch battery cells, the structure is simple, and the fixation is convenient, such that the partition plate and the pouch battery cells can be disposed compactly, thereby making the overall structure of the battery cell set more compact and stable.

In an embodiment of the present application, the partition plate is adhesively connected and fixed to the adjacent pouch battery cells by a double-sided adhesive tape.

In this embodiment, by adhesively connecting and fixing the partition plate to the adjacent pouch battery cells by a double-sided adhesive tape, the structure is simple and the fixation is convenient.

In an embodiment of the present application, a buffer member is arranged between at least two adjacent pouch battery cells in the first direction, and a hardness of the buffer member is less than a hardness of the film shell.

In this embodiment, by arranging the buffer member between two adjacent pouch battery cells, and setting the hardness of the buffer member to be less than the hardness of the film shell, the buffer member can well absorb the deformation of the pouch battery cells and the vibration under external impact, and can well buffer the direct contact friction of adjacent pouch battery cell holders, such that the overall structural stability of the battery cell set is better, thereby making the operation of the battery device more stable and reliable.

In some examples of the present application, the buffer member and the partition plate are simultaneously arranged between at least two adjacent pouch battery cells in the first direction.

In this embodiment, by simultaneously arranging the buffer member and the partition plate between at least two adjacent pouch battery cells, the structure is simple, and the arrangement is convenient, such that the partition plate can cooperate with the buffer member to support the pouch battery cells well. The cooperation between the buffer member and the partition plate can play a good buffering role for the two adjacent pouch battery cells disposed with the partition plate, such that any two adjacent pouch battery cells in the battery cell set can get a good buffering role, and thus the overall structure of the battery cell set is more stable.

In some examples of the present application, at most one of the buffer member and the partition plate is arranged between any two adjacent pouch battery cells in the first direction.

In this embodiment, by arranging at most one of the buffer member and the partition plate between any two adjacent pouch battery cells, the partition plates and the buffer members disposed in the battery cell set can be arranged at intervals or staggered, thereby reducing the assembly difficulty when the partition plate and the buffer member are disposed between the same two pouch battery cells at the same time, and enabling the battery cell set to be assembled with the partition plates and the buffer members conveniently and easily.

In some examples of the present application, at least one of the pouch battery cells is interposed between the buffer member and the partition plate in the first direction.

In this embodiment, by interposing at least one of the pouch battery cells between the buffer member and the partition plate, the structure is simple, such that the arrangement of the partition plates and the buffer members in the battery cell set can be flexibly and conveniently made, and a plurality of pouch battery cells can be well supported and buffered by the cooperation of the buffer members and the partition plates, thereby making the assembly of the battery device more convenient, and the operation of the battery device stable.

In an example of the present application, one of the buffer member and the partition plate is arranged between any two adjacent pouch battery cells in the first direction, and the buffer members and the partition plates in the battery cell set are alternately arranged in the first direction.

In this embodiment, by arranging the buffer member or the partition plate between two adjacent pouch battery cells in the battery cell set, and alternately arranging the buffer members and the partition plates in the first direction, the structure is simple, such that the arrangement of the partition plates and the buffer members in the battery cell set is more balanced, and each pouch battery cell in the battery cell set can be stably and reliably supported and buffered. This can ensure that the overall structural stability of the battery cell set is better, thereby enabling the battery device to operate more stably and have better thermal management performance.

In some examples of the present application, the buffer member covers 80% or more of a surface area of a thickness side of the pouch battery cell.

In this embodiment, by setting the buffer member to cover 80% or more of a surface area of a thickness side of the pouch battery cell, the pouch battery cell and the buffer member may form a larger buffer mating area, and the buffer member can cover most of the surface of one side of the pouch battery cell in the first direction, such that the buffer member can play a stable and effective buffering role on the pouch battery cell.

In some examples of the present application, both ends of the pouch battery cell in the third direction are respectively provided with the conductive members, the conductive members are electrically connected with the electrode assembly and at least partially exposed outside the film shell, and the conductive members on the same side of two adjacent pouch battery cells in the battery cell set are connected.

In this embodiment, by connecting the conductive members on the same side of two adjacent pouch battery cells, the electric connection of the plurality of pouch battery cells can be more convenient and easier under the condition of satisfying different electric connection modes of the plurality of pouch battery cells in the battery cell set.

In an embodiment of the present application, the battery cell set includes at least three of the pouch battery cells, and the pouch battery cell located between two adjacent pouch battery cells in the battery cell set is an intermediate battery cell; of two conductive members at both ends of the intermediate battery cell, one of the conductive members is connected to the conductive member on the same side of one pouch battery cell adjacent to the intermediate battery cell, and the other conductive member is connected to the conductive member on the same side of the other pouch battery cell adjacent to the intermediate battery cell.

In this embodiment, by connecting one conductive member of the intermediate battery cell to the conductive member on the same side of one adjacent pouch battery cell, and connecting the other conductive member of the intermediate battery cell to the conductive member on the same side of the other adjacent pouch battery cell, the structure is simple, and the connection relationship is clear and simple, such that a single conductive member is only connected to a single conductive member, thereby reducing the probability of problems such as confusion in connection relationship and the need to arrange adapting pieces when a single conductive member is connected to a plurality of conductive members in a plurality of pouch batteries. This can ensure that the connection between the plurality of pouch battery cells is convenient and easy, and the assembly of the battery cell set is more efficient and convenient.

In an embodiment of the present application, two of the conductive members forming a connection are in lap joint connection, and at least one of the conductive members is in a bent shape.

In this embodiment, by setting two of the conductive members forming a connection to be in lap joint connection, the two conductive members can have a larger connection area, such that the connection and fixation between the two conductive members are more stable and reliable, and moreover, at least one conductive member is in a bent shape, such that the connection between the two conductive members is more convenient and easier.

In an embodiment of the present application, two of the conductive members forming a connection are connected by an adapting piece, and the adapting piece is in a bent shape.

In this embodiment, by connecting two of the conductive members forming a connection by an adapting piece, the processing steps and procedures of the conductive members can be reduced when the pouch battery cells are connected, and quick and efficient connection processing can be carried out by using the adapting piece produced by standardization, such that the connection between the plurality of pouch battery cells is more convenient and efficient, and the production efficiency of the battery cell set is higher.

In an embodiment of the present application, a joint is in a bent shape, and the bent shape is U-shaped.

In this embodiment, by setting a joint between two connected conductive members to be in a bent shape, and the bent shape to be U-shaped, the structure is simple, the processing and the molding are convenient, and the stress concentration of the two connectors at the joint is well reduced, thereby making the connection between the two connectors more stable and reliable.

In an embodiment of the present application, two tabs protruding from both ends of the pouch battery cell have opposite polarities, and the two conductive members in lap joint connection have the same or opposite polarities.

In this embodiment, by setting two tabs protruding from both ends of the pouch battery cell to have opposite polarities, the use requirements of the pouch battery cell are satisfied, and the polarities of the two conductive members in lap joint connection are the same or opposite, such that the plurality of pouch battery cells can be flexibly connected and assembled as required.

In an embodiment of the present application, a plurality of the battery cell sets are provided, and at least two of the battery cell sets are disposed in the third direction, where the conductive members of two adjacent pouch battery cells in the third direction are directly connected.

In this embodiment, by directly connecting the conductive members of two adjacent pouch battery cells in the third direction, the structure is simple and the connection is convenient and easy, such that the steps and procedures of bending the conductive members of two adjacent pouch battery cells for connection during production or the number of the adapting pieces for connection can be well reduced, thereby making the production efficiency of the battery cell set higher during production and processing.

In some embodiments of the present application, the pouch battery cell is any one of a lithium iron phosphate battery cell, a ternary battery cell, and a solid-state battery cell.

In this embodiment, by setting the pouch battery cell to be any one of a lithium iron phosphate battery cell, a ternary battery cell, and a solid-state battery cell, the pouch battery cell can be flexibly set as different types of battery cells as required, such that the application scene of the pouch battery cell is wider, thereby enabling the battery device to better satisfy different use requirements.

In an embodiment of the present application, the pouch battery cell is a ternary battery cell, the battery device further includes a shell, the plurality of pouch battery cells are received in the shell, and in the second direction, the shell is provided with a pressure relief area.

Provided is an energy storage device according to a third aspect of the present application, which includes: a power conversion device and the battery device according to the second aspect of the present application, the battery device being configured to store or provide electric energy.

According to the energy storage device of the present application, by arranging the battery device of the second aspect, and by setting the thickness of the film shell to be less than 0.2 mm and the first dimension to be greater than or equal to 5 mm and less than or equal to 70 mm, the pouch battery cell has larger thickness and the wall thickness of the film shell is smaller, thereby enabling the pouch battery cell to have a higher energy density. Meanwhile, the ratio of the second dimension of any film part to the first dimension is greater than or equal to 0.4 and less than or equal to 0.6, such that the two film parts of the film shell have similar or same dimension structure and structural performance, so as to enable the two film parts to have more balanced bearing capacity for stress and the like generated in the accommodating cavity, and make the overall structure of the film shell more stable and the structural performance such as mechanical strength better. This can ensure that the film shell can well satisfy the supporting and protecting requirements of the pouch battery cell under the condition that the wall thickness is less than or equal to 0.2 mm, such that the energy density of the pouch battery cell can be stably and reliably increased, further reducing the arrangement number of structural components of support, heat conduction and the like in the battery device, and enlarging the arrangement space of the pouch battery cells in the battery device, thereby well increasing the overall energy density of the battery device.

Provided is an electric device according to a fourth aspect of the present application, which includes the battery device according to the second aspect of the present application or the energy storage device according to the third aspect of the present application, the battery device being configured to store or provide electric energy.

According to the electric device of the present application, by arranging the battery device of the second aspect or the energy storage device of the third aspect, and by setting the thickness of the film shell to be less than 0.2 mm and the first dimension to be greater than or equal to 5 mm and less than or equal to 70 mm, the pouch battery cell has larger thickness and the wall thickness of the film shell is smaller, thereby enabling the pouch battery cell to have a higher energy density. Meanwhile, the ratio of the second dimension of any film part to the first dimension is greater than or equal to 0.4 and less than or equal to 0.6, such that the two film parts of the film shell have similar or same dimension structure and structural performance, so as to enable the two film parts to have more balanced bearing capacity for stress and the like generated in the accommodating cavity, and make the overall structure of the film shell more stable and the structural performance such as mechanical strength better. This can ensure that the film shell can well satisfy the supporting and protecting requirements of the pouch battery cell under the condition that the wall thickness is less than or equal to 0.2 mm, such that the energy density of the pouch battery cell can be stably and reliably increased, further reducing the arrangement number of structural components of support, heat conduction and the like in the battery device, and enlarging the arrangement space of the pouch battery cells in the battery device, thereby well increasing the overall energy density of the battery device.

The additional aspects and the advantages of the present application will be partially provided in the following description, will become apparent from the following description, or will be learned through the practice of the present application.

### BRIEF DESCRIPTION OF THE DRAWINGS

FIG. 1 is a schematic diagram of a pouch battery cell according to an embodiment of the present application;
FIG. 2 is an enlarged schematic diagram of a portion at A shown in FIG. 1;
FIG. 3 is a schematic diagram of a pouch battery cell from another angle according to an embodiment of the present application;
FIG. 4 is an enlarged schematic diagram of a portion at B shown in FIG. 3;
FIG. 5 is a schematic diagram of a pouch battery cell from yet another angle according to an embodiment of the present application;
FIG. 6 is a schematic diagram of a battery device according to an embodiment of the present application;
FIG. 7 is a schematic diagram of battery cell sets, a heat exchange plate, partition plates and buffer members according to an embodiment of the present application;
FIG. 8 is an enlarged schematic diagram of a portion at C shown in FIG. 7;
FIG. 9 is a schematic diagram of two pouch battery cells of adjacent battery cell sets and a heat exchange plate according to an embodiment of the present application;
FIG. 10 is an enlarged schematic diagram of a portion at D shown in FIG. 9;
FIG. 11 is a schematic diagram of battery cell sets, partition plates and buffer members according to an embodiment of the present application;
FIG. 12 is an enlarged schematic diagram of a portion at E shown in FIG. 11;
FIG. 13 is a schematic diagram of a battery cell set, partition plates, buffer members and adapting pieces according to an embodiment of the present application;
FIG. 14 is an enlarged schematic diagram of a portion at F shown in FIG. 13;
FIG. 15 is a partial enlarged schematic diagram of pouch battery cells and blocking members according to an embodiment of the present application; and
FIG. 16 is a schematic diagram of an electric device according to an embodiment of the present application.

Reference numerals:
10. pouch battery cell;
11. film shell; 1101. sealing edge boss;
111. film part; 1111. sealing edge;
1112. side wall; 11121. first arc segment; 11122. straight line segment; 11123. second arc segment;
1113. bottom wall;
12. conductive member;
20. partition plate; 30. buffer member; 40. adhesive layer; 50. heat exchange plate; 60. case body; 70. adapting piece; 80. blocking member;
100. battery device; 200. motor; 300. controller;
1000. electric device.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to more than two (including two).

In the description of the embodiments of the present application, the technical terms "length", "width", "thickness", "upper", "lower", "front", "rear", "left", "right", "vertical", "horizontal", "top", "bottom", "inner", "outer", and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing. Among the power batteries currently used, the proportion of lithium-ion batteries is also increasing.

When the battery cells in the battery device are pouch battery cells, as the pouch battery cells are easy to deform, it is necessary to arrange supporting structures and structures of heat conduction, buffering and the like to satisfy the requirements of stable and reliable stacking and operation of a plurality of pouch battery cells. At present, the thickness of a single pouch battery cell is small, which makes the number of pouch battery cells required to be arranged in the battery device more, which makes the number of structural components of supporting, heat conduction and the like arranged in the battery device more, thus making the overall energy density of the battery device smaller.

Based on the above consideration, in order to increase the overall energy density of the battery device, the present application designs a pouch battery cell. By setting the thickness of the pouch battery cell to be larger, the energy density of the pouch battery cell is increased, such that the number of structural components of supporting, heat conduction and the like arranged in the battery device under the same dimension and specification is reduced, and the proportion of the pouch battery cells in the battery device is increased, thereby making the overall energy density of the battery device well improved.

The pouch battery cell disclosed in the embodiments of the present application can be used for an electric device using the pouch battery cell as a power supply, or various energy storage systems using a battery device as an energy storage element, where the electric device may be, but is not limited to, a mobile phone, a tablet, a laptop computer, an electric toy, an electric tool, an electric bicycle, an electric vehicle, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For example, when the electric device is a vehicle, the vehicle may be a fuel vehicle, a gas vehicle, or a new energy vehicle. The new energy vehicle may be a pure electric vehicle, a hybrid vehicle, an extended-range vehicle, or the like. A battery device is arranged inside the vehicle, and the battery device may be arranged at the bottom, head, or tail of the vehicle. The battery device may be used for powering the vehicle. For example, the battery device may serve as an operation power source for the vehicle. The vehicle may further include a controller and a motor. The controller is configured to control the battery device to power the motor, e.g., for operation power needed by the vehicle for start-up, navigation, and driving.

In some embodiments of the present application, the battery device may not only serve as the operation power source for the vehicle, but also as a driving power source for the vehicle to, instead of or in part instead of fuel or natural gas, provide driving power for the vehicle.

In the present application, a battery device refers to a single physical module that includes one or more pouch battery cells to provide higher voltage and capacity. For example, the battery device mentioned in the present application may be a battery module group, a battery pack, or the like.

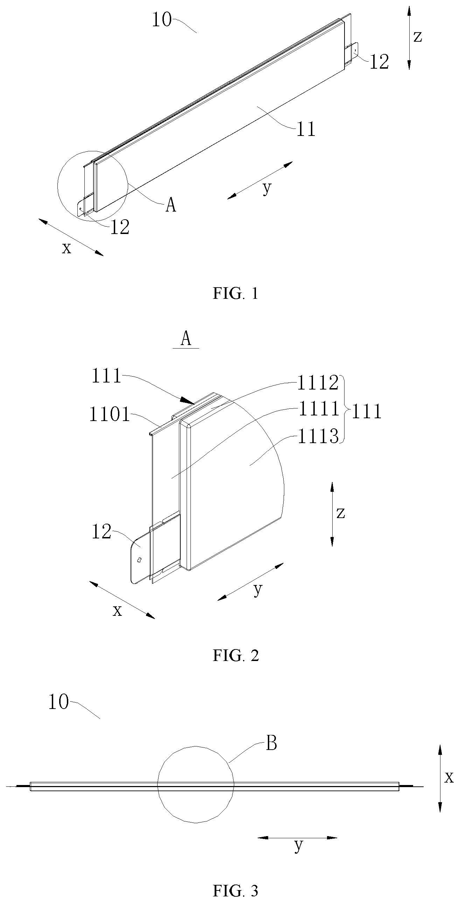

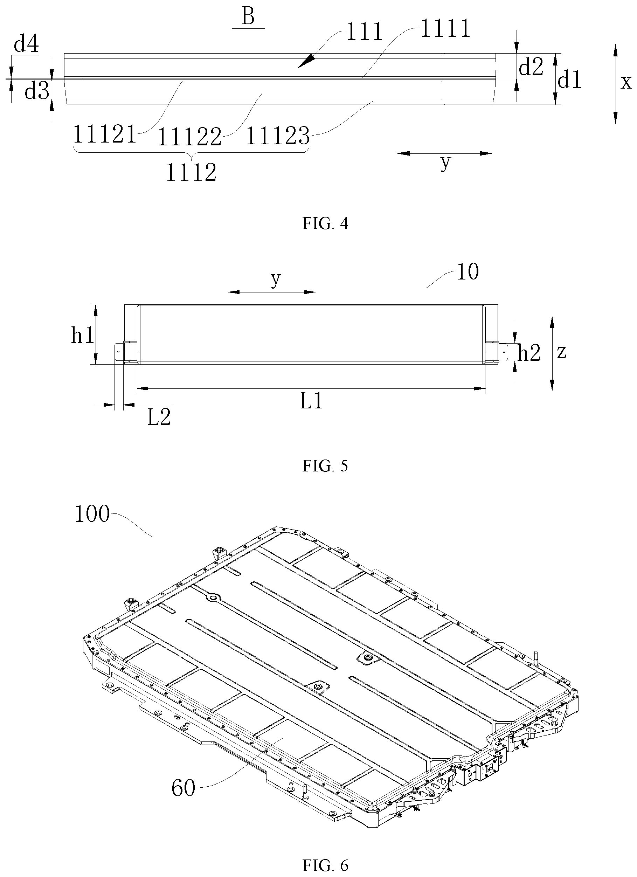

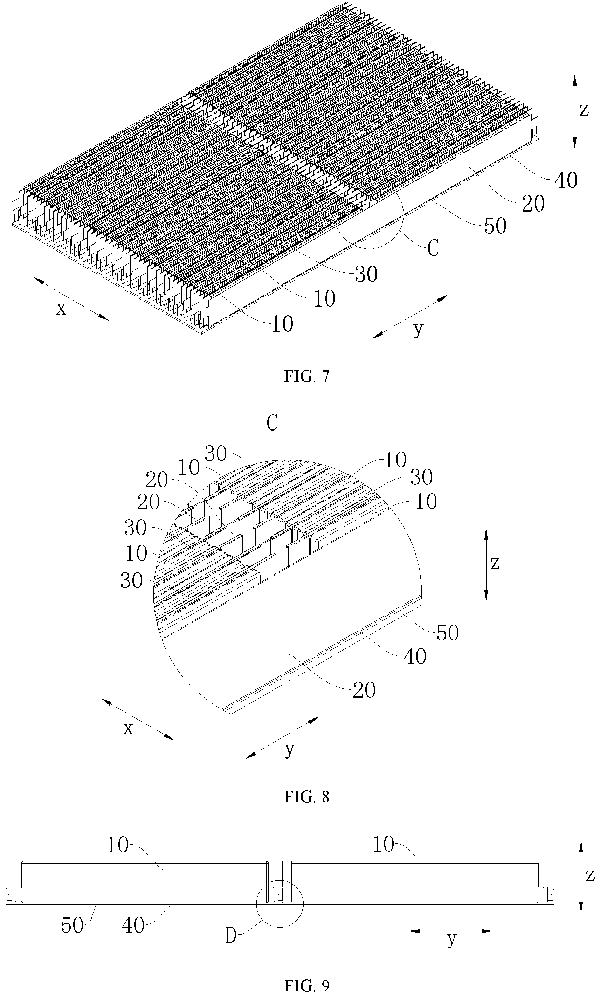

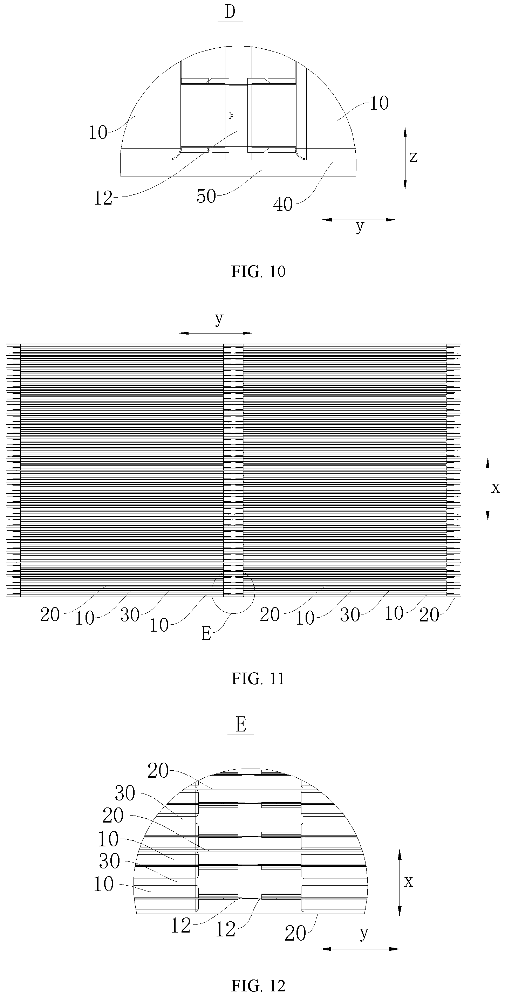

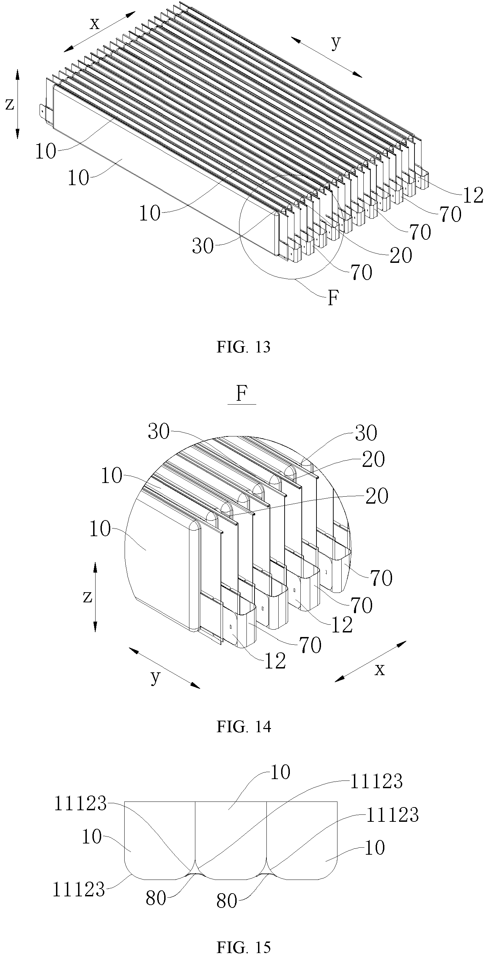

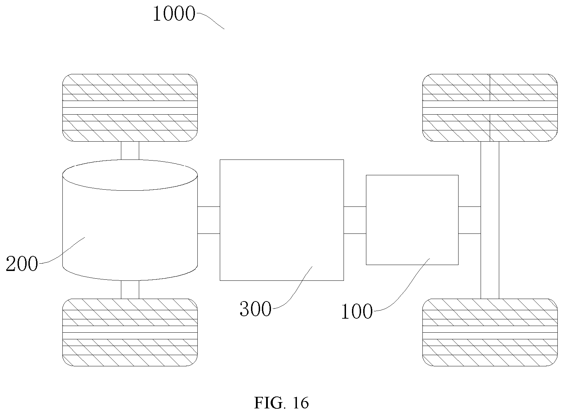

A pouch battery cell 10 according to embodiments of a first aspect of the present application is described below with reference to FIGs. 1 to 16. FIG. 1 is a schematic diagram of a pouch battery cell 10 according to an embodiment of the present application; FIG. 2 is an enlarged schematic diagram of a portion at A shown in FIG. 1; FIG. 3 is a schematic diagram of a pouch battery cell 10 from another angle according to an embodiment of the present application; FIG. 4 is an enlarged schematic diagram of a portion at B shown in FIG. 3; FIG. 5 is a schematic diagram of a pouch battery cell 10 from yet another angle according to an embodiment of the present application; FIG. 6 is a schematic diagram of a battery device 100 according to an embodiment of the present application; FIG. 7 is a schematic diagram of battery cell sets, a heat exchange plate 50, partition plates 20 and buffer members 30 according to an embodiment of the present application; FIG. 8 is an enlarged schematic diagram of a portion at C shown in FIG. 7; FIG. 9 is a schematic diagram of two pouch battery cells 10 of adjacent battery cell sets and a heat exchange plate 50 according to an embodiment of the present application; FIG. 10 is an enlarged schematic diagram of a portion at D shown in FIG. 9; FIG. 11 is a schematic diagram of battery cell sets, partition plates 20 and buffer members 30 according to an embodiment of the present application; FIG. 12 is an enlarged schematic diagram of a portion at E shown in FIG. 11; FIG. 13 is a schematic diagram of a battery cell set, partition plates 20, buffer members 30 and adapting pieces 70 according to an embodiment of the present application; FIG. 14 is an enlarged schematic diagram of a portion at F shown in FIG. 13; FIG. 15 is a partial enlarged schematic diagram of pouch battery cells 10 and blocking members 80 according to an embodiment of the present application; and FIG. 16 is a schematic diagram of an electric device 1000 according to an embodiment of the present application.

A battery device 100 according to embodiments of a second aspect of the present application is described first with reference to FIGs. 1 to 16. As shown in FIG. 7, provided is the battery device 100 according to the embodiments of the present application, which includes battery cell sets, where each battery cell set includes a plurality of pouch battery cells 10 stacked in a first direction (an x direction shown in FIG. 7), and the first direction may be the thickness direction of the pouch battery cells 10.

A pouch battery cell 10 according to embodiments of a first aspect of the present application is described below with reference to FIGs. 1 to 16.

As shown in FIGs. 1 to 16, provided is a pouch battery cell 10 according to the embodiments of the present application, which includes: a film shell 11 and an electrode assembly, where a wall thickness of the film shell 11 is less than or equal to 0.2 mm, the film shell 11 includes two film parts 111 connected in a first direction, both of the film parts 111 define an accommodating groove, and the accommodating grooves of the two film parts 111 are formed opposite to each other in the first direction and jointly form an accommodating cavity of the film shell 11; the electrode assembly is arranged in the accommodating cavity, where a dimension of the pouch battery cell 10 in the first direction is a first dimension, and a dimension of any of the film parts 111 in the first direction is a second dimension, the first dimension being greater than or equal to 5 mm and less than or equal to 70 mm, and a ratio of the second dimension to the first dimension is greater than or equal to 0.4 and less than or equal to 0.6.

In this embodiment, the pouch battery cell 10 includes a film shell 11 and an electrode assembly. The film shell 11 may be an aluminum-plastic film. Two film parts 111 of the film shell 11 connected in the first direction may be formed by processing an aluminum-plastic film substrate in a punching manner, and both of the film parts 111 define an accommodating groove, so the film shell 11 may be formed in a double punching manner, the accommodating grooves of the two film parts 111 are formed opposite to each other in the first direction and jointly form the accommodating cavity of the film shell 11, and the electrode assembly is arranged in the accommodating cavity. Illustratively, during the production and processing of the pouch battery cell 10, the film shell 11 may form two film parts 111 with accommodating grooves by double punching, the electrode assembly is arranged in the accommodating groove of one of the film parts 111, and the other film part 111 is folded in half towards the film part 111 accommodating the electrode assembly, such that the two accommodating grooves jointly form an accommodating cavity, and then the pouch battery cell 10 is subjected to subsequent production processes such as hot-pressing edge sealing and liquid injection. The two film parts 111 form a closed accommodating cavity through the sealing edge 1111, thus forming a complete film shell 11.

In this embodiment, the wall thickness of the film shell 11 is less than or equal to 0.2 mm. For example, the wall thickness of the film shell 11 may be 0.2 mm, 0.19 mm, 0.17 mm, 0.15 mm, 0.1 mm, or the like. The dimension of the pouch battery cell 10 in the first direction is a first dimension, the first dimension is a thickness dimension of the pouch battery cell 10, and the first dimension is greater than or equal to 5 mm and less than or equal to 70 mm. Referring to FIG. 4, if d1 is represented as the first dimension, d1 may be 5 mm, 6 mm, 10 mm, 12 mm, 17 mm, 25 mm, 30 mm, 40 mm, 47 mm, 53 mm, 60 mm, 65 mm, 70 mm, or the like. The dimension of any of the film parts 111 in the first direction is the second dimension, and the second dimensions of the two film parts 111 may be set to be the same or different as required, and as the pouch battery cell 10 is composed of the two film parts 111 to form the film shell 11, the overall dimension of the two film parts 111 in the first direction is the first dimension, that is, the sum of the second dimensions of the two film parts 111 is equal to the first dimension.

In this embodiment, the ratio of the second dimension to the first dimension is greater than or equal to 0.4 and less than or equal to 0.6. Referring to FIG. 4, if d2 is represented as the second dimension, the ratio of d2 to d1 may be 0.4, 0.45, 0.5, 0.52, 0.54, 0.55, 0.6, or the like, and the ratio of the second dimension of the other film part 111 to the first dimension may be correspondingly 0.6, 0.55, 0.5, 0.48, 0.46, 0.45, 0.4, or the like.

The electrode assembly is composed of a positive electrode plate, a negative electrode plate and a separation film, and the pouch battery cell 10 primarily works by means of movement of metal ions between the positive electrode plate and the negative electrode plate. The positive electrode plate includes a positive electrode current collector and a positive electrode active substance layer, where the positive electrode active substance layer coats the surface of the positive electrode current collector.

In this embodiment, by setting the wall thickness of the film shell 11 to be less than or equal to 0.2 mm, the film shell 11 in the pouch battery cell 10 is smaller in volume and lighter in weight, and the volume and mass of the electrode assembly in the pouch battery cell 10 are larger, such that the energy density of the pouch battery cell 10 can be well increased. By setting the first dimension to be greater than or equal to 5 mm and less than or equal to 70 mm, the pouch battery cell 10 is thicker, such that the pouch battery cell 10 may have a greater energy density with the thinner film shell 11, and the thickness of the pouch battery cell 10 may be flexibly set in a larger range as required, thereby enabling the pouch battery cell 10 to better satisfy the use requirements of the battery device 100 with different dimensions and specifications.

In this embodiment, by setting the ratio of the second dimension to the first dimension to be greater than or equal to 0.4 and less than or equal to 0.6, the dimensions of the two film parts 111 in the first direction may be relatively consistent, such that both of the film parts 111 can maintain sufficient mechanical strength to satisfy the molding requirements of the film shell 11, thereby forming the stable and reliable film shell 11 when the first dimension of the pouch battery cell 10 of this embodiment is set to be greater than or equal to 5 mm and less than or equal to 70 mm.

In this embodiment, by setting the thickness of the film shell 11 to be less than 0.2 mm, the ratio of the second dimension of any of the film parts 111 to the first dimension to be greater than or equal to 0.4 and less than or equal to 0.6, and the first dimension to be greater than or equal to 5 mm and less than or equal to 70 mm, the pouch battery cell 10 may have larger thickness and a higher energy density. Compared with a plurality of thin pouch battery cells 10 in the same volume, in this embodiment, the number of the pouch battery cells 10 disposed is small, such that the proportion of the film shells 11 can be reduced, and then a plurality of pouch battery cells 10 in the same volume can have a greater energy density.

For example, in this embodiment, if the first dimension of the pouch battery cell 10 is 5 mm, and the first dimension of a thin pouch battery cell 10 is 1 mm, when the pouch battery cells 10 of 5 mm are disposed in the first direction, 5 thin pouch battery cells 10 need to be arranged, that is, 5 shell structures are included, while only 1 pouch battery cell 10 in this embodiment needs to be arranged, that is only one shell structure is included, such that the energy density of the pouch battery cells 10 during arrangement is well enhanced.

It can be understood that, the volume ratio of the film shell 11 in the pouch battery cell 10 is closely related to the wall thickness of the film shell 11 and the overall dimension of the pouch battery cell 10. For example, when the film shells 11 with the same wall thickness are arranged in the pouch battery cells 10 of different dimensions, the volume ratio of the film shells 11 in smaller pouch battery cells 10 is larger, while the volume ratio of the film shells 11 in larger pouch battery cells 10 is smaller. Therefore, the energy density of the smaller pouch battery cell 10 is lower and the energy density of the larger flexible battery cell 10 is higher. In another aspect, in the pouch battery cells 10 of the same dimension, the greater the wall thickness of the film shell 11, the greater the volume ratio of the film shell 11 in the pouch battery cell 10, and the lower the energy density of the pouch battery cell 10.

In this embodiment, by setting the wall thickness of the film shell 11 to be less than or equal to 0.2 mm, and the first dimension of the pouch battery cell 10 to be greater than or equal to 5 mm, the pouch battery cell 10 may have a larger dimension in the first direction, while the wall thickness of the film shell 11 is smaller, thereby enabling the pouch battery cell 10 to have a higher energy density.

When the dimension of the pouch battery cell 10 is too large, the pouch battery cell 10 requires higher performance such as material strength and mechanical strength of the film shell 11, and the wall thickness of the film shell 11 needs to be increased according to the actual situation, which makes the energy density of the pouch battery cell 10 decrease. In this embodiment, by setting the first dimension of the pouch battery cell 10 to be less than or equal to 70 mm and the wall thickness of the film shell 11 to be less than or equal to 0.2 mm, the dimension of the pouch battery cell 10 may be set to be larger as required under the condition that the wall thickness of the film shell 11 is small, such that the pouch battery cell 10 can maintain a higher energy density.

In this embodiment, by setting the dimension of any film part 111 of the two film parts 111 in the film shell 11 in the first direction to be the second dimension, and the ratio of the second dimension to the first dimension to be greater than or equal to 0.4 and less than or equal to 0.6, the dimensions and structures of the two film parts 111 are similar or the same, and the space sizes of the two film parts 111 constituting the accommodating cavity are similar or the same, such that the two film parts 111 can have similar or the same structural performance, which means that the supporting effect of the two film parts 111 on the pouch battery cell 10 is relatively consistent; moreover, the two film parts 111 of the film shell 11 can distribute and bear the stress generated inside more evenly, such that the overall structure of the film shell 11 is more stable and the film shell 11 has better structural performance such as mechanical strength. Therefore, under the condition that the wall thickness of the film shell 11 is less than or equal to 0.2 mm, the film shell can stably and reliably satisfy the supporting and protection needs of the pouch battery cell 10 when the first dimension is set to be greater than or equal to 5 mm and less than or equal to 70 mm, such that the energy density of the pouch battery cell 10 can be stably and reliably increased under the condition that the pouch battery cell 10 of this embodiment has good structural performance.

In this embodiment, when the pouch battery cells 10 are assembled and arranged in the battery device 100, in the same arrangement space, the battery device 100 may obtain a greater energy density by arranging fewer pouch battery cells 10, and due to the reduction of the number of pouch battery cells, the number of supporting structures for supporting the pouch battery cells 10 and structural components of heat conduction, adhesion and fixation, and the like is also well reduced, such that the battery device 100 can have more space to arrange the pouch battery cells 10. Therefore, the overall energy density of the battery device 100 is well increased.

According to the pouch battery cell 10 of the embodiments of the present application, the thickness of the film shell 11 is set to be less than 0.2 mm, and the first dimension is greater than or equal to 5 mm and less than or equal to 70 mm, such that the pouch battery cell 10 has larger thickness and the wall thickness of the film shell 11 is smaller, thereby enabling the pouch battery cell 10 to have a higher energy density. Meanwhile, the ratio of the second dimension of any film part 111 to the first dimension is greater than or equal to 0.4 and less than or equal to 0.6, such that the two film parts 111 of the film shell 11 have similar or same dimension structure and structural performance, so as to enable the two film parts 111 to have more balanced bearing capacity for stress and the like generated in the accommodating cavity, and make the overall structure of the film shell 11 more stable and the structural performance such as mechanical strength better. This can ensure that the film shell 11 can well satisfy the supporting and protecting requirements of the pouch battery cell 10 under the condition that the wall thickness is less than or equal to 0.2 mm, such that the energy density of the pouch battery cell 10 can be stably and reliably increased, further reducing the arrangement number of structural components of support, heat conduction and the like in the battery device 100, and enlarging the arrangement space of the pouch battery cells 10 in the battery device 100, thereby well increasing the overall energy density of the battery device 100.

In some embodiments of the present application, referring to FIG. 4, the ratio of the second dimension to the first dimension may be greater than or equal to 0.45 and less than or equal to 0.55.

In this embodiment, the ratio of the second dimension to the first dimension is set to be greater than or equal to 0.45 and less than or equal to 0.55. For example, the ratio of d2 to d1 may be 0.45, 0.46, 0.48, 0.49, 0.5, 0.51, 0.53, 0.55, or the like.

In this embodiment, by setting the ratio of the second dimension to the first dimension to be greater than or equal to 0.45 and less than or equal to 0.55, the dimensions of the two film parts 111 in the first direction are more consistent, which is convenient for processing and manufacturing. Moreover, the accommodating grooves of the two film parts 111 can have sufficient depth to facilitate the arrangement of the electrode assembly, and the two film parts 111 can maintain relatively consistent mechanical strength, such that the overall structure of the film shell 11 is more stable and reliable, thereby making the operation and use of the pouch battery cell 10 stable and reliable.

In an embodiment of the present application, referring to FIG. 4, the ratio of the second dimension to the first dimension may be 0.5.

In this embodiment, the ratio of the first dimension to the first dimension is 0.5, that is, the two film parts 111 have the same dimension in the first direction, the two film parts 111 may form a symmetrical structure, and the accommodating grooves of the two film parts 111 have the same dimension.

In this embodiment, by setting the ratio of the second dimension to the first dimension to 0.5, the two film parts 111 may have the same structural configurations, such that the processing and molding of the film shell 11 are facilitated, and moreover, the two film parts 111 may have the same mechanical strength and structural performance, such that the overall structural stability and reliability of the film shell 11 are better, thereby making the operation of the pouch battery cell 10 more stable.

In some embodiments of the present application, referring to FIGs. 4 and 8, the first dimension may be greater than or equal to 15 mm and less than or equal to 45 mm.

In this embodiment, the first dimension is set to be greater than or equal to 15 mm and less than or equal to 45 mm. For example, d1 may be 15 mm, 16 mm, 20 mm, 25 mm, 35 mm, 40 mm, 42 mm, 45 mm, or the like.

In this embodiment, by setting the first dimension to be greater than or equal to 15 mm and less than or equal to 45 mm, the pouch battery cell 10 has larger thickness, such that the energy density of the battery device 100 can be well increased, and moreover, reducing the probability of reduced structural stability of the pouch battery cell 10 caused by the excessive thickness of the pouch battery cell 10 can make the pouch battery cell 10 have an appropriate thickness to operate stably and reliably.

In some embodiments of the present application, referring to FIG. 4, the second dimension may be greater than or equal to 3 mm and less than or equal to 35 mm.

The second dimension is greater than or equal to 3 mm and less than or equal to 35 mm. For example, d2 may be 3 mm, 5 mm, 6 mm, 8 mm, 15 mm, 30 mm, 35 mm, or the like.

In this embodiment, by setting the second dimension to be greater than or equal to 3 mm and less than or equal to 35 mm, the two film parts 111 may jointly form a film shell 11 with the required thickness of the pouch battery, thus satisfying the setting requirements of the pouch battery cell 10.

In an embodiment of the present application, referring to FIG. 4, the second dimension may be greater than or equal to 7 mm and less than or equal to 22 mm.

In this embodiment, the second dimension is further defined as greater than or equal to 7 mm and less than or equal to 22 mm. For example, d2 may be 7 mm, 8 mm, 10 mm, 12 mm, 15 mm, 20 mm, 22 mm, or the like.

In this embodiment, by setting the second dimension to be greater than or equal to 7 mm and less than or equal to 22 mm, the film parts 111 may have a more suitable dimension in the first direction, such that the film parts 111 can have good mechanical strength and structural stability, thereby making the overall structure of the film shell 11 more stable and reliable. This can ensure that the electrode assembly can be disposed in the accommodating cavity reliably and steadily, thus making the operation of the pouch battery cell 10 more stable.

In some embodiments of the present application, as shown in FIGs. 2 and 4, the film part 111 may include: a sealing edge 1111, a side wall 1112 and a bottom wall 1113, where the sealing edge 1111 and the bottom wall 1113 are arranged at an interval in the first direction, the side wall 1112 extends in an annular shape along a circumferential direction of the bottom wall 1113, one end of the side wall 1112 in the first direction is connected to a peripheral edge of the bottom wall 1113 and the other end extends to be connected to the sealing edge 1111 in the first direction, the sealing edge 1111, the side wall 1112 and the bottom wall 1113 jointly enclose an accommodating groove opening on one side in the first direction, and the electrode assembly is at least partially arranged in the accommodating groove.

In this embodiment, the film part 111 includes the sealing edge 1111, the side wall 1112, and the bottom wall 1113, where the sealing edge 1111 and the bottom wall 1113 are arranged at an interval in the first direction and connected by the side wall 1112, the sealing edge 1111 may be arranged on one side of the bottom wall 1113 facing the other film part 111, and the sealing edges 1111 of the two film parts 111 may be in abutting fit. The sealing edge 1111, the side wall 1112 and the bottom wall 1113 jointly enclose an accommodating groove opening on one side in the first direction. The bottom wall 1113 may form a groove bottom wall 1113 surface of the accommodating groove, the side wall 1112 may form an inner side wall 1112 surface of the accommodating groove, and the openings of the accommodating grooves of the two film parts 111 are opposite to each other in the first direction, such that the side walls 1112 of the two film parts 111 jointly form an inner side wall 1112 surface of the accommodating cavity, and the two bottom walls 1113 respectively form two groove bottom wall 1113 surfaces of the accommodating cavity in the first direction. The electrode assembly is at least partially arranged in the accommodating groove, which means that the electrode assembly is at least partially arranged in a single accommodating groove, and the electrode assembly is arranged in the accommodating cavity jointly formed by the two accommodating grooves.

When the pouch battery cell 10 is processed, two film parts 111 may be sealed by the sealing edges 1111 in the accommodating cavity. Illustratively, the sealing edges 1111 of the two film parts 111 which are oppositely arranged in the first direction may be connected by hot pressing, such that the circumferential direction of the accommodating cavity is sealed.

In this embodiment, the film part 111 includes a sealing edge 1111, a side wall 1112 and a bottom wall 1113, and the structure is simple, which can well satisfy the molding requirements of the accommodating groove and the accommodating cavity, such that the processing of the film shell 11 can be smoothly carried out and satisfy the processing and manufacturing requirements of the pouch battery cell 10.

In an embodiment of the present application, as shown in FIG.4, the side wall 1112 includes a first arc segment 11121, a straight line segment 11122 and a second arc segment 11123 sequentially connected in the first direction, where the straight line segment 11122 extends along a straight line in the first direction, the straight line segment 11122 is arc-connected with the sealing edge 1111 through the first arc segment 11121, and the straight line segment 11122 is arc-connected with the bottom wall 1113 through the second arc segment 11123.

In this embodiment, the side wall 1112 includes a first arc segment 11121, a straight line segment 11122 and a second arc segment 11123 sequentially connected in the first direction, where the straight line segment 11122 extends along a straight line in the first direction, and is arc-connected with the sealing edge 1111 through the first arc segment 11121, and is arc-connected with the bottom wall 1113 through the second arc segment 11123, that is, the sidewall 1112 and the sealing edge 1111 may be connected with rounded corners, and the sidewall 1112 and the bottom wall 1113 may also be connected with rounded corners. When the electrode assembly is assembled in the accommodating groove, the electrode assembly may move from the opening of the accommodating groove to the interior of the accommodating groove along the depth direction of the accommodating groove.

In this embodiment, setting the straight line segment 11122 of the side wall 1112 to extend in the first direction can play a good guiding role in the mobile assembly of the electrode assembly, and facilitate the arrangement of the electrode assembly in the accommodating groove, such that the space of the accommodating groove can be fully utilized, and moreover, the first arc segment 11121 and the second arc segment 11123 can cooperate with the first straight line segment 11122 to play a good guiding role, thus reducing the probability of frictional damage when the electrode assembly is loaded into the accommodating groove, and enabling the assembled pouch battery cell 10 to operate stably.

In some examples of the present application, referring to FIG. 4, a dimension of the straight line segment 11122 in the first direction is a third dimension, and a ratio of the third dimension to the second dimension may be greater than or equal to 0.6 and less than or equal to 0.9.

In this embodiment, the ratio of the third dimension of the straight line segment 11122 in the first direction to the second dimension is set to be greater than or equal to 0.6 and less than or equal to 0.9, and referring to FIG. 4, d3 is represented as the third dimension, and the ratio of d3 to d2 may be 0.6, 0.65, 0.7, 0.8, 0.9, or the like.

In this embodiment, by setting the ratio of the third dimension of the straight line segment 11122 in the first direction to the second dimension to be greater than or equal to 0.6 and less than or equal to 0.9, the accommodating space enclosed by the side wall 1112 of the straight line segment 11122 in the first direction occupies a larger proportion of the space of the accommodating groove, such that the space in the accommodating groove can be more fully utilized when the electrode assembly is arranged in the accommodating groove, and the arrangement of the electrode assembly and the film shell 11 can be more compact, thereby further increasing the energy density of the pouch battery cell 10 to a certain extent.

In an example of the present application, referring to FIG. 4, the ratio of the third dimension to the second dimension may be greater than or equal to 0.7 and less than or equal to 0.85.

In this embodiment, the ratio of the third dimension to the second dimension is further defined as greater than or equal to 0.7 and less than or equal to 0.85. For example, the ratio of d3 to d2 may be 0.7, 0.71, 0.73, 0.78, 0.85, or the like.

In this embodiment, by setting the ratio of the third dimension to the second dimension to be greater than or equal to 0.7 and less than or equal to 0.85, the accommodating groove has a larger accommodating space enclosed by the straight line segment 11122 in the first direction, such that the space of the accommodating groove can be fully utilized, and moreover, the first arc segment 11121 and the second arc segment 11123 form a good and smooth transition segment between the straight line segment 11122, the sealing edge 1111 and the bottom wall 1113, such that the electrode assembly and the film shell 11 can be assembled smoothly and conveniently.

In some examples of the present application, referring to FIG. 4, the dimension of the straight line segment 11122 in the first direction is a third dimension, and the third dimension may be greater than or equal to 5 mm and less than or equal to 30 mm.

In this embodiment, the third dimension is set to be greater than or equal to 5 mm and less than or equal to 30 mm. For example, d3 may be 5 mm, 6 mm, 6.5 mm, 7 mm, 8 mm, 10 mm, 15 mm, 17 mm, 21 mm, 25 mm, 30 mm, or the like.

In this embodiment, by setting the third dimension of the straight line segment 11122 in the first direction to be greater than or equal to 5 mm and less than or equal to 30 mm, the setting requirements of the pouch battery cells 10 with different thicknesses can be satisfied, such that the dimension of the film shell 11 jointly formed by the two film parts 111 in the first direction can satisfy the thickness requirements of the battery cells.

In an example of the present application, referring to FIG. 4, the third dimension may be greater than or equal to 7 mm and less than or equal to 18 mm.

In this embodiment, the third dimension is set to be greater than or equal to 7 mm and less than or equal to 18 mm. For example, d3 may be 7 mm, 8 mm, 10 mm, 12 mm, 13 mm, 18 mm, or the like.

In this embodiment, by further defining the third dimension as greater than or equal to 7 mm and less than or equal to 18 mm, the thickness of the film shell 11 may be in a more appropriate range, thereby satisfying the requirements of the thickness of the pouch battery cells 10.

In some examples of the present application, a radius of the first arc segment 11121 may be greater than or equal to 1.5 mm, and a radius of the second arc segment 11123 may be greater than or equal to 1.5 mm.

In this embodiment, the radius of the first arc segment 11121 is greater than or equal to 1.5 mm, and the radius of the second arc segment 11123 is greater than or equal to 1.5 mm. For example, the radius of first arc segment 11121 may be 1.5 mm, 1.6 mm, 1.7 mm, 2 mm, 3 mm, or the like, and the radius of the second arc segment 11123 may be 1.5 mm, 1.6 mm, 1.7 mm, 1.8 mm, 2 mm, 3 mm, or the like.

In this embodiment, by setting the radius of the first arc segment 11121 to be greater than or equal to 1.5 mm and the radius of the second arc segment 11123 to be greater than or equal to 1.5 mm, the transition arc segments with a sufficient dimension may be formed between the straight line segment 11122 and the sealing edge 1111 and between the straight line segment 11122 and the bottom wall 1113, such that the connection between the straight line segment 11122 and the bottom wall 1113 and the sealing edge 1111 can be more stable and reliable, and the first arc segment 11121 and the second arc segment 11123 can play a better guiding role.

In some embodiments of the present application, referring to FIG. 5, the width dimension of the pouch battery cell 10 in the second direction (e.g., a z direction in FIG. 5) may be less than or equal to 200 mm.

In this embodiment, the width dimension of the pouch battery cell 10 in the second direction is less than or equal to 200 mm, and referring to FIG. 5, if h1 is represented as the width dimension of the pouch battery cell 10 in the second direction, h1 may be 200 mm, 180 mm, 170 mm, 165 mm, 150 mm, 120 mm, or the like.

In this embodiment, by setting the width dimension of the pouch battery cell 10 in the second direction to be less than or equal to 200 mm, the pouch battery cell 10 has a smaller dimension in the second direction under the condition that the requirement of the energy density of the battery device 100 is satisfied, such that the overall dimension of the battery device 100 in the second direction is smaller, and the overall structure of the battery device 100 is flatter, thereby making the arrangement of the battery device 100 in the electric device 1000 such as vehicles and the energy storage device more convenient and easier.

In some embodiments of the present application, referring to FIG. 5, the length dimension of the pouch battery cell 10 in the third direction (e.g., a y direction in FIG. 5) may be less than or equal to 650 mm.

In this embodiment, the length dimension of the pouch battery cell 10 in the third direction is less than or equal to 650 mm, and referring to FIG. 5, if L1 is represented as the width dimension of the pouch battery cell 10 in the second direction, L1 may be 650 mm, 640 mm, 630 mm, 600 mm, 550 mm, or the like.

In this embodiment, by setting the length dimension of the pouch battery cell 10 in the third direction to be less than or equal to 650 mm, the pouch battery cell 10 may have a stable structural state while satisfying the energy density requirements of the battery device 100, thereby reducing the probability of mechanical stress and other problems caused by the long pouch battery cell 10, and enabling the pouch battery cell 10 to operate stably and reliably.

In some embodiments of the present application, referring to FIG. 5, the width dimension of the pouch battery cell 10 in the second direction may be less than or equal to 200 mm, and the length dimension of the pouch battery cell 10 in the third direction may be less than or equal to 650 mm, the third direction intersecting both of the second direction and the first direction.

In this embodiment, the width dimension of the pouch battery cell 10 in the second direction is less than or equal to 200 mm. For example, h1 may be 200 mm, 180 mm, 170 mm, 165 mm, 150 mm, 120 mm, or the like, and the length dimension of the pouch battery cell 10 in the third direction is set to be less than or equal to 650 mm. For example, L1 may be 650 mm, 640 mm, 630 mm, 600 mm, 550 mm, or the like.

The third direction intersects both of the second direction and the first direction, which means that the first direction and the second direction may be arranged perpendicularly or non-perpendicularly, i.e., at an acute or obtuse angle. For example, the first direction and the second direction may be arranged at an angle of 30°, 60°, 80°, 120°, 150° or 170°, and the first direction and the third direction may be arranged perpendicularly or non-perpendicularly, i.e., at an acute or obtuse angle. For example, the first direction and the third direction may be arranged at an angle of 30°, 60°, 80°, 120°, 150° or 170°, and the second direction and the third direction may be arranged perpendicularly or non-perpendicularly, i.e., at an acute or obtuse angle. For example, the second direction and the third direction may be arranged at an angle of 30°, 60°, 80°, 120°, 150° or 170°.

In this embodiment, by setting the width dimension of the pouch battery cell 10 in the second direction to be less than or equal to 200 mm and the length dimension of the pouch battery cell 10 in the third direction to be less than or equal to 650 mm, the pouch battery cell 10 may have a smaller layout space in the second direction and the overall structure remains stable while satisfying the energy density requirements of the battery device 100, thus facilitating the arrangement of the battery device 100 and making the operation more stable.

In some embodiments of the present application, as shown in FIGs. 2 and 4, a sealing edge boss 1101 may be formed on an end surface of at least one end of the film shell 11 in the second direction, and the sealing edge boss 1101 is configured to be formed by folding sealing edges 1111 of the two film parts 111, the second direction intersecting the first direction.

In this embodiment, a sealing edge boss 1101 is formed on an end surface of at least one end of the film shell 11 in the second direction. For example, in the second direction, the sealing edge boss 1101 may be formed on an end surface of one end of the film shell 11, or the sealing edge bosses 1101 may also be formed on end surfaces of both ends of the film shell 11. The sealing edge boss 1101 is configured to be formed by folding the sealing edges 1111 of the two film parts 111, after the two film parts 111 are matched to form the film shell 11 and the sealing edges 1111 are hot-pressed, the sealing edges 1111 of the two film parts 111 are hot-pressed into a whole, the integrated sealing edge 1111 may be folded or rolled to form the sealing edge boss 1101, and the sealing edge boss 1101 may not exceed the bottom walls 1113 of the two film parts 111 in the first direction.

When the pouch battery cells 10 are arranged in the battery device 100, when the two end surfaces of the pouch battery cell 10 in the second direction are assembled with supporting components, electric connectors or the like, the dimension of the sealing edge boss 1101 in the second direction is much smaller than that of the unfolded sealing edge 1111, and the dimension of the sealing edge boss 1101 folded by the sealing edge 1111 in the second direction is so small that it can be ignored, such that the two end surfaces of the pouch battery cell 10 can be well matched with the supporting and other components for assembly and arrangement, which makes the pouch battery cells 10 more convenient and easier to arrange.

In this embodiment, by forming the sealing edge boss 1101 on an end surface of at least one end of the film shell 11 in the second direction, the space occupied by the sealing edge 1111 in the second direction and the interference to the arrangement of the pouch battery cells 10 can be well reduced, which makes the overall dimension of the pouch battery cells 10 in the second direction smaller, thereby facilitating the arrangement of the pouch battery cells 10 in the battery device 100, and moreover, the sealing edge boss 1101 can promote the sealing reliability of the accommodating cavity to a certain extent, thus making the pouch battery cell 10 have a more stable sealing effect.

In an embodiment of the present application, the bulge height of the sealing edge boss 1101 in the second direction may be less than or equal to 0.5 mm.

In this embodiment, the bulge height of the sealing edge boss 1101 in the second direction is less than or equal to 0.5 mm, where the bulge height refers to a distance dimension away from the end surface of the pouch battery cell 10 in the second direction. For example, the bulge height of the sealing edge boss 1101 in the second direction may be 0.5 mm, 0.4 mm, 0.35 mm, 0.34 mm, 0.3 mm, 0.2 mm, or the like.

In this embodiment, by setting the bulge height of the sealing edge boss 1101 in the second direction to be less than or equal to 0.5 mm, the bulge dimension of the sealing edge boss 1101 on the pouch battery cell 10 is very small, such that one end of the pouch battery cell 10 with the sealing edge boss 1101 in the second direction can still conveniently cooperate the assembly of supporting, fixing, and other structures, thereby making the assembly of the pouch battery cells 10 in the battery device 100 more convenient and easier.

In some embodiments of the present application, as shown in FIG.1, both ends of the pouch battery cell 10 in the third direction are respectively provided with conductive members 12, and the conductive members 12 are electrically connected with the electrode assembly and are at least partially exposed outside the film shell 11, the third direction intersecting the first direction.

In this embodiment, both ends of the pouch battery cell 10 in the third direction are respectively provided with conductive members 12, and the conductive members 12 are electrically connected with the electrode assembly and are at least partially exposed outside the film shell 11. Illustratively, the conductive members 12 arranged at both ends of the pouch battery cell 10 in the third direction may be respectively connected with a positive electrode tab and a negative electrode tab in the electrode assembly, and the pouch battery cell 10 may be externally powered or externally charged through the two conductive members 12.

In this embodiment, both ends of the pouch battery cell 10 in the third direction are respectively provided with the conductive members 12, the conductive members 12 are electrically connected with the electrode assembly, and the structure is simple, which can well satisfy the use requirements of the pouch battery cells 10.

In an embodiment of the present application, referring to FIGs. 1 and 2, a part of the conductive member 12 exposed outside the film shell 11 is a lead-out part, and the lead-out part is formed in a sheet shape.

In this embodiment, the part of the conductive member 12 exposed outside the film shell 11 is the lead-out part, and the lead-out part is in a sheet shape. The thickness direction of the lead-out part may be in the same direction as the second direction, and when the plurality of pouch battery cells 10 are disposed in the first direction, the plurality of pouch battery cells 10 may be electrically connected through the conductive parts as required.

In this embodiment, by setting the lead-out part to be in a sheet shape, the lead-out part may have a larger electric connection surface, such that the lead-out part can be conveniently and reliably electrically connected with other electric connectors or conductive members 12.

In some examples of the present application, referring to FIGs. 1 and 2, rounded corners are respectively formed on end surfaces of both sides of the lead-out part in the second direction and an end surface of the lead-out part at one end facing away from the electrode assembly in the third direction.

In this embodiment, the rounded corners are respectively formed on end surfaces of both sides of the lead-out part in the second direction and an end surface of the lead-out part at one end facing away from the electrode assembly in the third direction. In other words, two end corners of one end of the lead-out part facing away from the electrode assembly in the second direction are rounded, and rounded corner transitions are formed between an end surface of the lead-out part at one end facing away from the electrode assembly in the second direction and two end surfaces of the lead-out part in the second direction.

In this embodiment, the rounded corners are respectively formed on the end surfaces of both sides of the lead-out part in the second direction and the end surface of the lead-out part at one end facing away from the electrode assembly in the third direction, such that the stress on the lead-out part can be well dispersed, and the risks of scratch of the pouch battery cells 10 and scratch of operators and the like caused by sharp edges of the lead-out part can be reduced, thereby making the electric connection operation of the lead-out part more convenient and stable.

In an embodiment of the present application, referring to FIGs. 1 and 2, the part of the conductive member 12 exposed outside the film shell 11 is a lead-out part, and the lead-out part may be of a flexible structure.

In this embodiment, the lead-out part of the conductive member 12 is set as a flexible structure. For example, the lead-out part may be a flexible copper foil, a nickel-plated copper tape, a flexible conductive polymer, or the like.

In this embodiment, by setting the lead-out part to be of a flexible structure, the electric connection of the lead-out part can be more convenient, such that the lead-out part can better adapt to the electric connection requirements of different angles and directions, thereby making the electric connection between the pouch battery cell 10 and other pouch battery cells 10 or external circuits or the like more convenient and reliable.

In an embodiment of the present application, referring to FIG. 4, a part of the conductive member 12 exposed outside the film shell 11 is a lead-out part, and the thickness of the lead-out part may be 0.1 mm to 0.5 mm.

In this embodiment, the thickness of the lead-out part is set to be greater than or equal to 0.1 mm and less than or equal to 0.5 mm, and referring to FIG. 4, if d4 is represented as the thickness of the lead-out part, d4 may be 0.1 mm, 0.2 mm, 0.25 mm, 0.3 mm, 0.5 mm, or the like.

In this embodiment, by setting the thickness of the lead-out part to be 0.1 mm to 0.5 mm, the lead-out part may have enough current passage area to satisfy the requirements of electric connection, and the lead-out part may have enough mechanical strength to stably and reliably carry out electric connection, and the probability of the problems of inconvenient connection, cost increase and the like caused by the excessive thickness of the lead-out part is reduced, thereby making the electric connection of the lead-out part stable and convenient.

In an embodiment of the present application, referring to FIG. 5, a part of the conductive member 12 exposed outside the film shell 11 is a lead-out part, and a width dimension of the lead-out part in the second direction may be 20 mm to 60 mm.

In this embodiment, the width dimension of the lead-out part in the second direction is set to be greater than or equal to 20 mm and less than or equal to 60 mm, and referring to FIG. 5, if h2 is represented as the width dimension of the lead-out part in the second direction, h2 may be 20 mm, 23 mm, 25 mm, 26 mm, 30 mm, 35 mm, 45 mm, 50 mm, 55 mm, 60 mm, or the like.

In this embodiment, by setting the width dimension of the lead-out part in the second direction to be 20 mm to 60 mm, the lead-out part may have a sufficient dimension in the second direction to conveniently carry out the electric connection operation, and the probability of inconvenience of electric connection operation caused by the fact that the lead-out part is too wide and is not easy to bend is reduced, thereby making the electric connection of the lead-out part flexible and convenient.

In an embodiment of the present application, referring to FIG. 5, a part of the conductive member 12 exposed outside the film shell 11 is a lead-out part, and a length dimension of the lead-out part in the third direction may be 10 mm to 50 mm.

In this embodiment, the length dimension of the lead-out part in the third direction is set to 10 mm to 50 mm, and referring to FIG. 5, if L2 is represented as the length dimension of the lead-out part in the third direction, L2 may be 10 mm, 12 mm, 15 mm, 20 mm, 25 mm, 30 mm, 40 mm, 50 mm, or the like.

In this embodiment, by setting the length dimension of the lead-out part in the third direction to be greater than or equal to 10 mm, the lead-out part may have a sufficient length to be electrically connected, and by setting the length dimension of the lead-out part in the third direction to be less than or equal to 50 mm, the cost increase and the space occupation caused by the overlong lead-out part can be reduced, thereby making the whole structure of the pouch battery cell 10 relatively compact.

A battery device 100 according to embodiments of a second aspect of the present application is described below with reference to FIGs. 1 to 16.

As shown in FIGs. 1 to 16, provided is a battery device 100 according to embodiments of the present application, which includes battery cell sets, where each battery cell set includes a plurality of the pouch battery cells 10 stacked in the first direction, and the pouch battery cells 10 are the pouch battery cell 10 according to the embodiments of the first aspect of the present application.

According to the battery device 100 of the embodiments of the present application, by arranging the pouch battery cells 10 of the embodiments of the first aspect, and by setting the thickness of the film shell 11 to be less than 0.2 mm, and the first dimension to be greater than or equal to 5 mm and less than or equal to 70 mm, the pouch battery cell 10 has larger thickness and the wall thickness of the film shell 11 is smaller, such that the pouch battery cell 10 can have a higher energy density. Meanwhile, the ratio of the second dimension of any film part 111 to the first dimension is greater than or equal to 0.4 and less than or equal to 0.6, such that the two film parts 111 of the film shell 11 have similar or same dimension structure and structural performance, so as to enable the two film parts 111 to have more balanced bearing capacity for stress and the like generated in the accommodating cavity, and make the overall structure of the film shell 11 more stable and the structural performance such as mechanical strength better. This can ensure that the film shell 11 can well satisfy the supporting and protecting requirements of the pouch battery cell 10 under the condition that the wall thickness is less than or equal to 0.2 mm, such that the energy density of the pouch battery cell 10 can be stably and reliably increased, further reducing the arrangement number of structural components of support, heat conduction and the like in the battery device 100, and enlarging the arrangement space of the pouch battery cells 10 in the battery device 100, thereby well increasing the overall energy density of the battery device 100.

In some embodiments of the present application, as shown in FIGs. 7 and 8, the battery device 100 may further include: a heat exchange plate 50, the heat exchange plate 50 being arranged on at least one side of the plurality of pouch battery cells 10 in the second direction, and being configured to exchange heat with the plurality of pouch battery cells 10, the second direction intersecting the first direction.

In this embodiment, the battery device 100 further includes a heat exchange plate 50, the heat exchange plate 50 may be a liquid cooling plate, and the heat exchange plate 50 is arranged on at least one side of the plurality of pouch battery cells 10 in the second direction. For example, the heat exchange plate 50 may be arranged on one side of the plurality of pouch battery cells 10 in the second direction, and the heat exchange plates 50 may also be arranged on both sides of the plurality of pouch battery cells 10 in the second direction, respectively. When the battery device 100 operates, the heat that produces when the plurality of pouch battery cells 10 operate in the battery cell set is dissipated through the heat exchange plate 50, and when the battery cell set needs to be heated, the heat exchange plate 50 may transmit heat to the pouch battery cells 10 in the battery cell set.

In this embodiment, by arranging the heat exchange plate 50, the heat exchange plate 50 is arranged on at least one side of the plurality of pouch battery cells 10 in the second direction, the structure is simple and the arrangement is reasonable, which makes the heat exchange plate 50 conveniently exchange heat with the plurality of pouch battery cells 10, such that the battery cell set can obtain a good heat exchange effect, and the battery cell set can operate reliably and stably, thereby making the operation of the battery device 100 more stable.

In an embodiment of the present application, referring to FIGs. 9 and 10, a surface of the film shell 11 on one side facing the heat exchange plate 50 in the second direction is planar and is connected to the heat exchange plate 50 by a heat conduction adhesive or a heat conduction pad.

A surface of the film shell 11 on one side facing the heat exchange plate 50 in the second direction is planar, that is, no sealing edge boss 1101 is formed on a surface of the film shell 11 on one side facing the heat exchange plate 50. Illustratively, in the processing and molding process of the film shell 11, a side surface of the film shell 11 in the second direction may be formed at the connecting part of the two film parts 111 after the two film parts 111 are folded in half, and the side surface may be formed by directly connecting and matching the side walls 1112 of the two film parts 111, so it is unnecessary to leave the sealing edges 1111. After the film shell 11 is folded in half, the side walls 1112 of the two film parts 111 cooperate to form the peripheral wall structures of the film shell 11 in the second direction and the third direction, and the sealing edges 1111 of the two film parts 111 seal the accommodating cavity and the conductive members 12 in the circumferential direction of the film shell 11 by hot pressing or other methods.

A surface of the film shell 11 on one side facing the heat exchange plate 50 is connected to the heat exchange plate 50 by a heat conduction adhesive or a heat conduction pad, and for example, the heat conduction adhesive may be a heat-conducting structural adhesive, and the heat conduction pad may be a rubber pad or the like. When the battery cell set is assembled with the heat exchange plate 50, the heat conduction adhesive or the heat conduction pad may be laid on a surface of the heat exchange plate 50 on one side matched with the film shell 11 in advance, and the battery cell set may be integrally arranged on the heat exchange plate 50 and fixedly connected with the heat exchange plate 50 through the heat conduction adhesive or the heat conduction pad.

In this embodiment, by setting the surface of the film shell 11 on one side facing the heat exchange plate 50 to be planar, the structure is simple, which can make the film shell 11 and the heat exchange plate 50 have a stable mating contact surface, such that the film shell 11 can be stably and reliably fixed to the heat exchange plate 50 by a heat conduction adhesive or a heat conduction pad, thereby making the assembly and fixation of the pouch battery cell 10 on the heat exchange plate 50 more convenient and stable, and making the assembly and fixation of the battery cell set and the heat exchange plate 50 more reliable.

In an embodiment of the present application, referring to FIGs. 8 and 10, a sealing edge boss 1101 may be formed on one side of the film shell 11 in the second direction, and the battery device 100 may further include: an adhesive layer 40, the adhesive layer 40 being adhesively connected between the heat exchange plate 50 and the pouch battery cells 10, where in the second direction, a height of the adhesive layer 40 is greater than the bulge height of the sealing edge boss 1101.

In this embodiment, the sealing edge boss 1101 is formed on one side of the film shell 11 in the second direction, and the adhesive layer 40 arranged on the battery device 100 is connected between the heat exchange plate 50 and the pouch battery cells 10. Illustratively, the adhesive layer 40 may be an adhesive layer, e.g., a heat-conducting structural adhesive layer, and the height of the adhesive layer 40 in the second direction is greater than the bulge height of the sealing edge boss 1101. When one side of the film shell 11 with the sealing edge boss 1101 is fixed to the heat exchange plate 50, as the height of the adhesive layer 40 is greater than the bulge height of the sealing edge boss, the sealing edge boss 1101 on the film shell 11 may be disposed in the adhesive layer 40, and the outer surface of the sealing edge boss 1101 and the end surface of the film shell 11 facing the heat exchange plate 50 are both in contact adhesion with the adhesive layer 40.

In this embodiment, one side of the film shell 11 with the sealing edge boss 1101 is adhesively connected with the heat exchange plate 50 through the adhesive layer 40, and the height of the adhesive layer 40 is greater than the bulge height of the sealing edge boss 1101, such that the adhesive layer 40 can fully cover the gap between the end surface of the film shell 11 and the heat exchange plate 50, and the film shell 11 can be adhesively connected and fixed to the heat exchange plate 50 through the adhesive layer 40 reliably and stably, thereby making the assembly and fixation of the battery cell set to the heat exchange plate 50 reliable and stable.

In an embodiment of the present application, referring to FIG. 8, the battery device 100 may further include: the adhesive layer 40, the adhesive layer 40 being adhesively connected between the heat exchange plate 50 and the pouch battery cells 10, and a part of the adhesive layer 40 being configured to overflow between two adjacent pouch battery cells 10 in the first direction to adhesively connect the two adjacent pouch battery cells 10.

In this embodiment, a part of the adhesive layer 40 overflows between two adjacent pouch battery cells 10 in the first direction, and the two connected pouch battery cells 10 are adhered. Illustratively, for one pouch battery cell 10 in the battery cell set, after the battery cell set is adhesively connected and fixed to the heat exchange plate 50, a surface of the pouch battery cell 10 on one side facing the heat exchange plate 50 in the second direction is adhesively connected and fixed to the heat exchange plate 50, two side surfaces of the pouch battery cell 10 in the first direction are connected to the adjacent pouch battery cells 10 by overflowing colloid, and the two side surfaces of the pouch battery cells 10 in the first direction are adhesively connected to the heat exchange plate 50 by overflowing colloid.

In this embodiment, a part of the adhesive layer 40 is configured to overflow between two adjacent pouch battery cells 10 in the first direction, such that the two adjacent pouch battery cells 10 can be better connected and fixed at one end facing the heat exchange plate 50, the overall arrangement of a plurality of pouch battery cells 10 in the battery cell set is more stable, and the adhesive connection area between the pouch battery cells 10 and the heat exchange plate 50 through the adhesive layer 40 is well increased, thus making the adhesive connection and fixation between the pouch battery cells 10 and the heat exchange plate 50 more stable and reliable, thereby making the fixation between the battery cell set and the heat exchange plate 50 more stable and reliable.

In some embodiments of the present application, referring to FIG. 15, the battery device 100 further includes a bottom plate and an adhesive layer 40, the bottom plate is located on one side of the battery cell set in the second direction, the battery cell set is adhesively connected with the bottom plate through the adhesive layer 40, a surface of the pouch battery cell 10 on one side facing the adhesive layer 40 is a first surface, two side surfaces of the pouch battery cell 10 in the first direction are both second surfaces, and the first surface is in chamfer connection to the two second surfaces; where the battery device 100 further includes blocking members 80, each blocking member 80 is arranged at a chamfer, and the blocking member 80 is configured to block the adhesive layer 40 located at the chamfer from overflowing to a position where the second surface is located.

In this embodiment, the battery device 100 is provided with a bottom plate and an adhesive layer 40, the battery cell set is adhesively connected with the bottom plate through the adhesive layer 40, the bottom plate may be a part of a case body 60 of the battery device 100, and one end of each of the plurality of pouch battery cells 10 in the battery cell set facing the bottom plate may be adhesively connected and fixed with the bottom plate through the adhesive layer 40, where a surface of the pouch battery cell 10 on one side facing the adhesive layer 40 is a first surface, that is, the first surface of the pouch battery cell 10 is adhesively connected and fixed to the adhesive layer 40. Referring to FIGs. 2 and 5, the first surface may be surfaces of the side walls 1112 of the two film parts 111 of the pouch battery cell 10 on the sides facing the adhesive layer 40. Specifically, the first surface may be a surface of a straight line segment 11122 of the side wall 1112 on one side facing the adhesive layer 40, the second surface of the pouch battery cell 10 may be an outer surface of the bottom wall 1113 of the film part 111 in the first direction, and a chamfer between the first surface and the two second surfaces may be a second arc segment 11123 of the side wall 1112.

In this embodiment, a blocking member 80 is arranged at the chamfer, and the blocking member 80 is configured to block the adhesive layer 40 at the chamfer from overflowing to the position where the second face is located, that is, to block the colloid of the adhesive layer 40 from overflowing between the adjacent second surfaces of two adjacent pouch battery cells 10. After the battery device 100 is assembled, two adjacent chamfers of two adjacent pouch battery cells 10 form a certain gap in the first direction. The colloid of the adhesive layer 40 will overflow into the gap between the two chamfers and be adhesively connected with the surfaces of the two chamfers, thereby adhesively connecting the two adjacent pouch battery cells 10. When the colloid continues to overflow toward the second surface in the second direction, the blocking member 80 will block the overflow of the colloid.

In this embodiment, by arranging the blocking member 80 at the chamfer to block the overflow of the adhesive layer 40 towards the position where the second surface is located, the probability that the colloid in the adhesive layer 40 overflows between the second surfaces of the adjacent pouch battery cells 10 when the battery cell set and the bottom plate are adhesively connected and assembled by the adhesive layer 40 can be well reduced, thereby well reducing the risk of damage to the pouch battery cells 10 caused by stress concentration caused by the overflowing colloid, and enabling the pouch battery cells 10 to maintain a stable structural state and service life.

In an embodiment of the present application, referring to FIG. 15, one blocking member 80 may be arranged between two adjacent pouch battery cells 10 in the first direction.

In this embodiment, one blocking member 80 is arranged between two adjacent pouch battery cells 10. Illustratively, the blocking member 80 may be connected to the chamfer surfaces of two adjacent chamfers in the first direction to separate the two chamfers from the two first surfaces in the second direction, and then separate the two adjacent first surfaces from the overflowing colloid at the two chamfers. The blocking member 80 may also be directly arranged between the two adjacent first surfaces and located at one end of the first surface connected with the chamfer, and the blocking member 80 is attached to the two first surfaces to block the overflowing colloid at the chamfer from further overflowing between the two adjacent pouch battery cells 10.

In this embodiment, by arranging one blocking member 80 between two adjacent pouch battery cells 10, the blocking member 80 is convenient to arrange, and the use quantity of the blocking members 80 is less, thereby reducing the cost of the battery device 100 to a certain extent.

In an embodiment of the present application, the blocking member 80 may be a foam member, and the blocking member 80 may be adhesively connected to the bottom plate.

In this embodiment, the blocking member 80 is set as a foam member, which is light in weight, has good cushioning performance and is easy to process and shape. When the foam member is adhesively connected to the bottom plate and assembled at the chamfer, the foam member may abut against the surfaces of the pouch battery cells 10 through certain deformation, or the foam member may fill the gap between adjacent pouch battery cells 10 as required.

In this embodiment, by setting the blocking member 80 as a foam member and to be adhesively connected to the bottom plate, the structure is simple, such that the blocking member 80 can be conveniently arranged at the chamfer and stably separate the overflowing colloid of the adhesive layer 40, thereby facilitating the assembly.

In an embodiment of the present application, the blocking member 80 is an adhesive member, and the adhesive member is adhesively connected to one end of the pouch battery cell 10 facing the bottom plate.

In this embodiment, the blocking member 80 is an adhesive member, and for example, the blocking member 80 may be an adhesive strip, the adhesive member is adhesively connected to the pouch battery cell 10, and the adhesive member may be arranged in the form of one-sided adhesive backing. Illustratively, when the battery device 100 is assembled, the adhesive member may be adhesively connected and fixed to the corresponding position of the pouch battery cell 10 before the battery cell set and the bottom plate are adhesively connected and fixed by the adhesive layer 40, so as to separate and block the gap between adjacent pouch battery cells 10, the gap between two adjacent first surfaces and the gap between two adjacent chamfers. The battery device 100 and the adhesive member are adhesively connected to the adhesive layer 40 as a whole, and the adhesive member blocks the adhesive layer 40 at the chamfer.

In this embodiment, by setting the blocking member 80 as an adhesive member, the structure is simple, which can well satisfy the use requirements, thereby making the assembly and fixation between the blocking member 80 and the pouch battery cells 10 more convenient.

In some embodiments of the present application, as shown in FIG. 8, the plurality of pouch battery cells 10 are disposed in a stacked manner in the first direction, and the battery device 100 may further include partition plates 20, the hardness of the partition plates 20 is higher than the hardness of the film shell 11, a plurality of the partition plates 20 are provided, the plurality of partition plates 20 are disposed at intervals in the first direction, and at least two of the pouch battery cells 10 are disposed between two adjacent partition plates 20.

In this embodiment, the battery device 100 further includes partition plates 20, and a plurality of the partition plates 20 are arranged at intervals in the first direction. For example, the number of the partition plates 20 may be two, three, four, five, six, seven, or the like. At least two pouch battery cells 10 are arranged between two adjacent partition plates 20, and for example, two, three, four or other pouch battery cells 10 may be arranged between two adjacent partition plates 20.

In this embodiment, a plurality of partition plates 20 are arranged at intervals in the first direction, the pouch battery cells 10 are arranged between the adjacent partition plates 20, and the hardness of the partition plate 20 is greater than that of the film shell 11, such that when a plurality of pouch battery cells 10 are disposed in the first direction, the plurality of partition plates 20 can support the plurality of pouch battery cells 10 well, thereby enabling the plurality of pouch battery cells 10 to be disposed compactly and conveniently, and moreover, the partition plates 20 can play a certain separation role, such that a plurality of pouch battery cells 10 in the battery cell set can be separated among different partition plates 20, and therefore, when part of the pouch battery cells 10 fail, for example, when the pouch battery cells 10 are in thermal runaway, the partition plates 20 can play a certain role in separating the pouch battery cells 10 in thermal runaway, thereby reducing the influence of thermal runaway and the like on other pouch battery cells 10 and enabling the battery cell set to operate more stably and reliably.

The hardness of the partition plate 20 is greater than the hardness of the film shell 11, and thus when the partition plates 20 are assembled with a plurality of pouch battery cells 10, the partition plates 20 may maintain a stable structural state, and the probability of structural damage to the partition plates 20 caused by the film shell 11 is well reduced, such that the partition plates 20 can stably and reliably support and separate the pouch battery cells 10.

In this embodiment, at least two pouch battery cells 10 are arranged between two adjacent partition plates 20, such that the number of the partition plates 20 disposed in the battery cell set is less, thereby making the space occupied by the partition plate 20 structure in the battery device 100 less, thus enabling the battery device 100 to maintain a high energy density to a certain extent.

In this embodiment, by disposing the plurality of partition plates 20 at intervals in the first direction, setting the hardness of the partition plate 20 to be greater than the hardness of the film shell 11, and arranging at least two pouch battery cells 10 between two adjacent partition plates 20, the plurality of pouch battery cells 10 in the battery cell set can be stably and reliably supported by the partition plates 20 in the first direction, such that the overall structure of the battery cell set is more stable, and the arrangement number of the partition plates 20 can be reduced, thereby making the battery device 100 maintain a high energy density.

In an embodiment of the present application, referring to FIGs. 8 and 12, the number of the pouch battery cells 10 sequentially disposed between two adjacent partition plates 20 in the first direction may be less than or equal to four.

In this embodiment, the number of the pouch battery cells between two adjacent partition plates 20 is less than or equal to four. For example, four, three or two pouch battery cells 10 may be disposed between two adjacent partition plates 20.

In this embodiment, by setting the number of the pouch battery cells 10 between two adjacent partition plates 20 to be less than or equal to four, the arrangement number of the pouch battery cells 10 between two adjacent partition plates 20 is appropriate, such that each pouch battery cell 10 between two partition plates 20 can be stably and effectively supported by the two partition plates 20, thereby reducing the probability that the number of the pouch battery cells 10 between two partition plates 20 exceeds the supporting capacity of the partition plates 20. This can ensure that a plurality of partition plates 20 can stably and reliably support each pouch battery cell 10 in the battery cell set, and the overall structural stability of the battery cell set is better.

In an embodiment of the present application, referring to FIGs. 7 and 9, the pouch battery cells 10 extend in the third direction, the third direction is a length direction of the pouch battery cell 10, a length direction of the partition plate 20 extends in the length direction of the pouch battery cell 10, and a length of the partition plate 20 is greater than 80% of a length of the pouch battery cell 10.

In this embodiment, the pouch battery cells 10 extend in the third direction, and the length direction of the partition plate 20 extends in the length direction of the pouch battery cell 10. In other words, the partition plates 20 extend in the length direction of the pouch battery cells 10, the length direction of the partition plate 20 is the same as the length direction of the pouch battery cell 10, and the third direction is also the length direction of the partition plate 20. The length of the partition plate 20 is greater than 80% of the length of the pouch battery cell 10. For example, the length of the partition plate 20 may be 81%, 82%, 84%, 85%, 90%, 100%, 120%, 150%, 170%, 200%, or the like of the length of the pouch battery cell 10.

In this embodiment, by setting the length of the partition plate 20 to be greater than 80% of the length of the pouch battery cell 10, the pouch battery cells 10 and the partition plate 20 may have a larger mating support surface, such that the partition plates 20 can cover most or all of the extension range of the pouch battery cells 10 in the third direction. This can ensure that the partition plate 20 can play a good role in supporting and separating the pouch battery cells 10.

In an embodiment of the present application, referring to FIG. 7, a plurality of the battery cell sets may be provided, and at least two of the battery cell sets are disposed in the third direction, and the length of the partition plate 20 is more than twice the length of the pouch battery cell 10, such that two adjacent battery cell sets disposed in the length direction of the pouch battery cells 10 share one partition plate 20.

In this embodiment, a plurality of battery cell sets are provided. For example, the number of the battery cell sets may be two, three, four, five, six, or the like. The plurality of battery cell sets are disposed in the third direction, and the length of the partition plate 20 is more than twice the length of the pouch battery cell 10. For example, the length of the partition plate 20 may be 2.1 times, 2.5 times, 3 times, or the like the length of the pouch battery cell 10. Illustratively, when the length of the partition plate 20 is more than twice the length of the pouch battery cell 10 and less than three times the length of the pouch battery cell 10, one partition plate 20 may be arranged in two battery cell sets or three battery cell sets in the third direction, and two adjacent battery cell sets or three battery cell sets may share one partition plate 20.

In this embodiment, by providing a plurality of the battery cell sets and disposing the plurality of battery cell sets in the third direction, the structure is simple and the arrangement is reasonable, such that the use requirements of the battery device 100 can be well satisfied. By setting the length of the partition plate 20 to be more than twice the length of the pouch battery cell 10, the partition plate 20 may support at least two adjacent pouch battery cells 10 simultaneously, such that the arrangement number of the partition plates 20 can be reduced, and the positioning of a plurality of battery cell sets during arrangement is more convenient and the arrangement is more consistent, thereby improving the assembly efficiency of the battery device 100 to a certain extent.

In an embodiment of the present application, referring to FIG. 12, the thickness of the partition plate 20 in the first direction may be less than the thickness of the pouch battery cell 10, and the width of the partition plate 20 in the second direction is greater than 80% of the width of the pouch battery cell 10.

In this embodiment, the width of the partition plate 20 in the second direction is greater than 80% of the width of the pouch battery cell 10. For example, the width of the partition plate 20 may be 81%, 82%, 84%, 85%, 90%, 100%, 120%, 150%, 170%, 200%, or the like of the width of the pouch battery cell 10.

In this embodiment, by setting the width of the partition plate 20 to be greater than 80% of the width of the pouch battery cell 10, the pouch battery cells 10 and the partition plate 20 may form a larger support-matching area, such that the partition plate 20 can cover most of the surface of one side of the pouch battery cell 10 in the first direction. This can ensure that the partition plate 20 can play a good role in supporting and separating the pouch battery cells 10.

In an embodiment of the present application, the thickness of the partition plate 20 in the first direction may be 0.8 mm to 2.0 mm.

In this embodiment, the thickness of the partition plate 20 in the first direction is set to be greater than or equal to 0.8 mm and less than or equal to 2 mm. For example, the thickness of the partition plate 20 may be 0.8 mm, 0.9 mm, 1 mm, 1.3 mm, 1.5 mm, 2 mm, or the like.

In this embodiment, by setting the thickness of the partition plate 20 to be greater than or equal to 0.8 mm, the partition plate 20 may have good structural strength to support the pouch battery cells 10 stably and reliably, and by setting the thickness of the partition plate 20 to be less than or equal to 2 mm, the partition plate 20 is thinner under the condition of satisfying the supporting requirements, thereby reducing the space occupied by the partition plates 20 in the battery device 100 and further enabling the battery device 100 to have a higher energy density.

In an embodiment of the present application, the partition plate 20 may be an aluminum plate, an aluminum alloy plate, a copper plate, or a steel plate.

In this embodiment, the partition plate 20 is set to be an aluminum plate, an aluminum alloy plate, a copper plate, or a steel plate. The aluminum plate and the aluminum alloy plate have low density and good heat conductivity, the copper plate has good mechanical strength and heat conductivity, and the steel plate has good mechanical strength and durability, and good economic efficiency.

In this embodiment, by setting the partition plate 20 as an aluminum plate, an aluminum alloy plate, a copper plate, or a steel plate, the partition plate 20 may have good mechanical strength, such that the partition plate 20 can satisfy the supporting requirements well, and the partition plate 20 can have a good heat conduction effect, thereby making the pouch battery cells 10 in the battery cell set exchange heat through the partition plates 20, and enabling the battery cell set to obtain a better heat exchange effect.

In an embodiment of the present application, the partition plate 20 may be of a solid structure.

In this embodiment, the partition plate 20 is set to be of a solid structure, that is, the partition plate 20 is not provided with any structure such as a hole, a flow channel or an empty cavity, and the partition plate 20 is of a solid plate structure.

In this embodiment, by setting the partition plate 20 to be of a solid structure, the partition plate 20 may have good mechanical strength and support reliability, such that the plurality of pouch battery cells 10 in the battery cell set can be supported more stably and reliably.

In an embodiment of the present application, the partition plate 20 may be a heat conducting member and is thermally connected to the film shell 11.

In this embodiment, the partition plate 20 is a heat conducting member and is thermally connected to the film shell 11. For example, the partition plate 20 may be a plate with heat conductivity, such as a copper plate or an aluminum alloy plate, and the partition plate 20 is thermally connected to the film shell 11. For example, the partition plate 20 and the film shell 11 may be thermally connected through a heat-conducting structural adhesive or may be connected and fixed by a double-sided adhesive tape or the like to achieve heat transfer.

In this embodiment, by setting the partition plate 20 to be a heat conducting member, the partition plate 20 may exchange heat with the adjacent pouch battery cells 10. When the pouch battery cells 10 need to dissipate heat, the heat may be transferred out through the partition plate 20. Illustratively, the heat may be conducted out quickly through the partition plate 20, and the partition plate 20 may also be thermally connected with the heat exchange plate 50, such that the heat can be transferred from the partition plate 20 to the heat exchange plate 50.

In this embodiment, by setting the partition plate 20 as a heat conducting member and to be thermally connected to the film shell 11, the partition plate 20 may play a good heat exchange role for the pouch battery cell 10, such that the pouch battery cell 10 can exchange heat through the partition plate 20 in the first direction, thereby enabling the battery cell set to obtain a better heat exchange effect, and enabling the battery device 100 to have better thermal management performance.

In an embodiment of the present application, a heat exchange flow channel is formed in the partition plate 20.

In this embodiment, a heat exchange flow channel is formed in the partition plate 20, such that when the battery cell set operates, a heat exchange fluid can flow in the heat exchange flow channel in the partition plate 20 to perform a heat exchange operation on the pouch battery cell 10, and meanwhile, the heat exchange plate 50 performs a heat exchange operation on the pouch battery cell 10 on one side or two sides of the second direction.

In this embodiment, by forming the heat exchange flow channel in the partition plate 20, the partition plate 20 may be used as a liquid cooling plate to perform efficient heat exchange operation on the pouch battery cell 10, such that the heat exchange effect of the partition plate 20 on the pouch battery cell 10 in the first direction can be greatly improved, thereby enabling the battery cell set to obtain a better heat exchange effect, and enabling the battery device 100 to have better thermal management performance; moreover, the partition plate 20 integrates the liquid cooling heat exchange function, such that additional heat exchange structures are reduced, and under the condition of improving the heat exchange effect, the number of structural parts of non-pouch battery cells 10 in the battery device 100 is less, thereby making the arrangement of the battery cell sets in the battery device 100 more compact, and enabling the battery device 100 to maintain a higher energy density.

In an embodiment of the present application, the partition plate 20 may be adhesively connected to the adjacent pouch battery cell 10.

In this embodiment, the partition plate 20 is adhesively connected to the adjacent pouch battery cell 10. For example, the partition plate 20 may be fixed to the adjacent pouch battery cell 10 by gluing.

In this embodiment, by adhesively connecting the partition plate 20 to the adjacent pouch battery cell 10, the structure is simple, and the fixation is convenient, such that the partition plate 20 and the pouch battery cells 10 can be disposed compactly, thereby making the overall structure of the battery cell set more compact and stable.

In an embodiment of the present application, the partition plate 20 may be adhesively connected and fixed to the adjacent pouch battery cells 10 by a double-sided adhesive tape.

In this embodiment, the partition plate 20 may be adhesively connected and fixed to the adjacent pouch battery cells 10 by a double-sided adhesive tape. When the pouch battery cells 10 are assembled with the partition plate 20, the double-sided adhesive tape may be adhesively connected and fixed to the pouch battery cells 10 or the partition plate 20 first, and then the pouch battery cells 10 and the partition plate 20 are adhesively connected and fixed by the double-sided adhesive tape.

In this embodiment, by adhesively connecting and fixing the partition plate 20 to the adjacent pouch battery cells 10 by a double-sided adhesive tape, the structure is simple and the fixation is convenient.

In an embodiment of the present application, as shown in FIGs. 8 and 12, a buffer member 30 is arranged between at least two adjacent pouch battery cells 10 in the first direction, and the hardness of the buffer member 30 is less than the hardness of the film shell 11.

In this embodiment, the buffer member 30 is arranged between at least two adjacent pouch battery cells 10, which may mean that in the battery cell set, when the plurality of pouch battery cells 10 are in the first direction, and no partition plate 20 is arranged between any two adjacent pouch battery cells 10, the buffer member 30 is arranged.

Illustratively, as the partition plates 20 are arranged at intervals in the first direction, at least two pouch battery cells 10 are arranged between adjacent partition plates 20, and the partition plate 20 may also be arranged between two adjacent pouch battery cells 10, the buffer member 30 may be arranged when no partition plate 20 is arranged between two adjacent pouch battery cells 10. When the partition plate 20 is arranged between two adjacent pouch battery cells 10, the buffer member 30 may also be arranged as required. For example, when two pouch battery cells 10 are arranged between two partition plates 20, the buffer member 30 may be arranged between the two pouch battery cells 10, and no buffer members 30 are arranged at the positions where the partition plates 20 are arranged. At this time, the buffer members 30 and the partition plates 20 may be spaced or staggered in the first direction. Optionally, the buffer member 30 may be a buffer pad.

In this embodiment, by arranging the buffer member 30 between two adjacent pouch battery cells, and setting the hardness of the buffer member 30 to be less than the hardness of the film shell 11, the buffer member 30 can well absorb the deformation of the pouch battery cells 10 and the vibration under external impact, and can well buffer the direct contact friction of adjacent pouch battery cell 10 holders, such that the overall structural stability of the battery cell set is better, thereby making the operation of the battery device 100 more stable and reliable.

In some examples of the present application, referring to FIGs. 8 and 12, the buffer member 30 and the partition plate 20 may be simultaneously arranged between at least two adjacent pouch battery cells 10 in the first direction.

In this embodiment, the buffer member 30 and the partition plate 20 are simultaneously arranged between at least two adjacent pouch battery cells 10. Illustratively, the partition plate 20 may be adhesively connected and fixed to one of the pouch battery cells 10 and the buffer member 30, and the buffer member 30 may be in abutting fit with another pouch battery cell 10.

In this embodiment, by simultaneously arranging the buffer member 30 and the partition plate 20 between at least two adjacent pouch battery cells 10, the structure is simple, and the arrangement is convenient, such that the partition plate 20 can cooperate with the buffer member 30 to support the pouch battery cells 10 well. The cooperation between the buffer member 30 and the partition plate 20 can play a good buffering role for the two adjacent pouch battery cells 10 disposed with the partition plate 20, such that any two adjacent pouch battery cells 10 in the battery cell set can get a good buffering role, and thus the overall structure of the battery cell set is more stable.

In some examples of the present application, referring to FIGs. 8 and 12, at most one of the buffer member 30 and the partition plate 20 may be arranged between any two adjacent pouch battery cells 10 in the first direction.

In this embodiment, at most one of the buffer member 30 and the partition plate 20 is arranged between any two adjacent pouch battery cells 10, that is, the partition plate 20 may be arranged between any two adjacent pouch battery cells 10 while no buffer member 30 is arranged, or the buffer member 30 may be arranged while no partition plate 20 is arranged.

In this embodiment, by arranging at most one of the buffer member 30 and the partition plate 20 between any two adjacent pouch battery cells 10, the partition plates 20 and the buffer members 30 disposed in the battery cell set can be arranged at intervals or staggered, thereby reducing the assembly difficulty when the partition plate 20 and the buffer member 30 are disposed between the same two pouch battery cells 10 at the same time, and enabling the battery cell set to be assembled with the partition plates 20 and the buffer members 30 conveniently and easily.

In some examples of the present application, referring to FIGs. 8 and 12, at least one pouch battery cell 10 may be interposed between the buffer member 30 and the partition plate 20 in the first direction.

In this embodiment, at least one pouch battery cell 10 is interposed between the buffer member 30 and the partition plate 20, that is, one or more pouch battery cells 10 may be interposed between the buffer member 30 and the partition plate 20, and at least one pouch battery cell 10 is supported by the partition plate 20 and buffered and damped by the buffer member 30.

In this embodiment, by interposing at least one of the pouch battery cells 10 between the buffer member 30 and the partition plate 20, the structure is simple, such that the arrangement of the partition plates 20 and the buffer members 30 in the battery cell set can be flexibly and conveniently made, and a plurality of pouch battery cells 10 can be well supported and buffered by the cooperation of the buffer members 30 and the partition plates 20, thereby making the assembly of the battery device 100 more convenient, and the operation of the battery device 100 stable.

In an example of the present application, referring to FIGs. 8 and 12, one of the buffer member 30 and the partition plate 20 may be arranged between any two adjacent pouch battery cells 10, and the buffer members 30 and the partition plates 20 in the battery cell set are alternately arranged in the first direction.

In this embodiment, one of the buffer member 30 and the partition plate 20 may be arranged between any two adjacent pouch battery cells 10, and the buffer members 30 and the partition plates 20 are alternately arranged in the first direction. For example, in the first direction, if an arrangement position is arranged between two adjacent pouch battery cells 10, and a plurality of pouch battery cells 10 in the battery cell set constitute a plurality of arrangement positions disposed in the first direction, the partition plates 20 and the buffer members 30 that are alternately disposed are sequentially arranged at the plurality of arrangement positions in the first direction; two adjacent pouch battery cells 10 with the partition plate 20 are adhesively connected and fixed through the partition plate 20, and two adjacent pouch battery cells 10 with the buffer member 30 are in abutting fit through the buffer member 30.

In this embodiment, by arranging the buffer member 30 or the partition plate 20 between two adjacent pouch battery cells 10 in the battery cell set, and alternately arranging the buffer members 30 and the partition plates 20 in the first direction, the structure is simple, such that the arrangement of the partition plates 20 and the buffer members 30 in the battery cell set is more balanced, and each pouch battery cell 10 in the battery cell set can be stably and reliably supported and buffered. This can ensure that the overall structural stability of the battery cell set is better, thereby enabling the battery device 100 to operate more stably and have better thermal management performance.

In some examples of the present application, the buffer member 30 may cover 80% or more of a surface area of a thickness side of the pouch battery cell 10.

In this embodiment, the buffer member 30 covers 80% or more of the surface area of the thickness side of the pouch battery cell 10. For example, the buffer member 30 may cover 81%, 82%, 84%, 85%, 90%, 100%, or the like of the surface area of the thickness side of the pouch battery cell 10.

In this embodiment, by setting the buffer member 30 to cover 80% or more of a surface area of a thickness side of the pouch battery cell 10, the pouch battery cell 10 and the buffer member 30 may form a larger buffer mating area, and the buffer member 30 can cover most of the surface of one side of the pouch battery cell 10 in the first direction, such that the buffer member 30 can play a stable and effective buffering role on the pouch battery cell 10.

In some embodiments of the present application, referring to FIGs. 13 and 14, both ends of the pouch battery cell 10 in the third direction are respectively provided with the conductive members 12, the conductive members 12 are electrically connected with the electrode assembly and at least partially exposed outside the film shell 11, and the conductive members 12 on the same side of two adjacent pouch battery cells 10 in the battery cell set are connected.

In this embodiment, the conductive members 12 on the same side of two adjacent pouch battery cells 10 in the battery cell set are connected. Illustratively, when the positive electrodes of a plurality of arranged pouch battery cells 10 are disposed on the same side in the third direction, two adjacent pouch battery cells 10 may be connected in parallel through the conductive members 12 on the same side; when the positive electrodes and the negative electrodes of a plurality of arranged pouch battery cells 10 on the same side are alternately disposed, two adjacent pouch battery cells 10 may be connected in parallel through the conductive members 12 on the same side, or when the same-side arrangement form of the positive and negative electrodes in a plurality of pouch battery cells may be set more flexibly and complicatedly as required, a plurality of pouch battery cells 10 may be connected in parallel through the conductive members 12 on the same side.

In this embodiment, by connecting the conductive members 12 on the same side of two adjacent pouch battery cells 10, the electric connection of the plurality of pouch battery cells 10 can be more convenient and easier under the condition of satisfying different electric connection modes of the plurality of pouch battery cells 10 in the battery cell set.

In an embodiment of the present application, referring to FIGs. 13 and 14, the battery cell set may include at least three of the pouch battery cells 10, and the pouch battery cell 10 located between two adjacent pouch battery cells 10 in the battery cell set is an intermediate battery cell; of two conductive members 12 at both ends of the intermediate battery cell, one of the conductive members 12 is connected to the conductive member 12 on the same side of one pouch battery cell 10 adjacent to the intermediate battery cell, and the other conductive member 12 is connected to the conductive member 12 on the same side of the other pouch battery cell 10 adjacent to the intermediate battery cell.

In this embodiment, the battery cell set includes at least three of the pouch battery cells 10. For example, when the battery cell set is provided with three pouch battery cells 10, in the first direction, the pouch battery cell 10 located in the middle is recorded as an intermediate battery cell, and the other two pouch battery cells 10 may be recorded as adjacent battery cells. When the battery cell set is provided with four pouch battery cells 10, the pouch battery cell 10 located in the middle among three adjacent pouch battery cells 10 is recorded as an intermediate battery cell, and the two adjacent pouch battery cells 10 may be recorded as adjacent battery cells, and on the same side in the third direction, the conductive member 12 of the intermediate battery cell is connected to the conductive member 12 of one of the adjacent battery cells, and the other conductive member 12 of the intermediate battery cell is connected to the conductive member 12 of the other of the adjacent battery cells, and then the conductive members 12 may form an end-to-end electric connection form for the electrodes at both ends of a plurality of pouch battery cells 10 in the third direction.

In this embodiment, when the positive and negative electrodes of the pouch battery cells 10 are respectively disposed on the same side of both sides in the third direction, two adjacent pouch battery cells 10 may form a common electrode through the connection of the conductive members 12. For example, after the positive electrodes of the two pouch battery cells 10 disposed on the same side are connected through the conductive members 12, the external circuits of the two conductive members 12 may be connected to the conductive members 12, namely, may be electrically connected to the two pouch battery cells 10. When the positive and negative electrodes of the pouch battery cells 10 are alternately disposed on both sides of the third direction along the first direction, a plurality of pouch battery cells 10 may be connected in series, and the battery cell set may be electrically connected with an external circuit through two conductive members 12.

In this embodiment, by connecting one conductive member 12 of the intermediate battery cell to the conductive member 12 on the same side of one adjacent pouch battery cell 10, and connecting the other conductive member 12 of the intermediate battery cell to the conductive member 12 on the same side of the other adjacent pouch battery cell 10, the structure is simple, and the connection relationship is clear and simple, such that a single conductive member 12 is only connected to a single conductive member 12, thereby reducing the probability of problems such as confusion in connection relationship and the need to arrange adapting pieces when a single conductive member 12 is connected to a plurality of conductive members 12 in a plurality of pouch batteries. This can ensure that the connection between the plurality of pouch battery cells 10 is convenient and easy, and the assembly of the battery cell set is more efficient and convenient.

In an embodiment of the present application, referring to FIG. 14, two of the conductive members 12 forming a connection are in lap joint connection, and at least one of the conductive members 12 is in a bent shape.

In this embodiment, the two conductive members 12 forming a connection are in lap joint connection, that is, the two conductive members 12 have a certain lap-joint mating area, and at least one conductive member 12 is in a bent shape. For example, one conductive member 12 may extend along a straight line in the third direction, and the other conductive member 12 may be bent toward the conductive member 12 in the first direction to achieve lap joint connection with the conductive member 12, or both of the conductive members 12 are in a bent shape. Illustratively, the two conductive members 12 may be bent towards each other in the first direction and in lap joint connection.

In this embodiment, by setting two of the conductive members 12 forming a connection to be in lap joint connection, the two conductive members 12 can have a larger connection area, such that the connection and fixation between the two conductive members 12 are more stable and reliable, and moreover, at least one conductive member 12 is in a bent shape, such that the connection between the two conductive members 12 is more convenient and easier.

In an embodiment of the present application, referring to FIG. 14, two of the conductive members 12 forming a connection are connected by an adapting piece 70, and the adapting piece 70 is in a bent shape.

In this embodiment, the two conductive members 12 are connected by an adapting piece 70, and the adapting piece 70 is in a bent shape. Illustratively, two of the conductive members 12 forming a connection may extend along a straight line in the third direction, and the adapting piece 70 is in lap joint connection with the conductive members 12 at both ends in the first direction through its own bent shape.

In this embodiment, by connecting two of the conductive members 12 forming a connection by an adapting piece 70, the processing steps and procedures of the conductive members 12 can be reduced when the pouch battery cells 10 are connected, and quick and efficient connection processing can be carried out by using the adapting piece 70 produced by standardization, such that the connection between the plurality of pouch battery cells 10 is more convenient and efficient, and the production efficiency of the battery cell set is higher.

In an embodiment of the present application, referring to FIG. 14, a joint is in a bent shape, and the bent shape is U-shaped.

In this embodiment, the joint is in a bent shape, which means that the position where two conductive members 12 are connected is formed into a bent shape. When the conductive members 12 are processed, the end parts may be bent, and when the two connected conductive members 12 are connected, the bent parts may be connected to form a bent shape at the joint.

In this embodiment, by setting a joint between two connected conductive members 12 to be in a bent shape, and the bent shape to be U-shaped, the structure is simple, the processing and the molding are convenient, and the stress concentration of the two connectors at the joint is well reduced, thereby making the connection between the two connectors more stable and reliable.

In an embodiment of the present application, two tabs protruding from both ends of the pouch battery cell 10 have opposite polarities, and the two conductive members 12 in lap joint connection have the same or opposite polarities.

In this embodiment, the polarities of the two tabs protruding from both ends of the pouch battery cell 10 are opposite, and the polarities of the two conductive members 12 in lap joint connection are the same or opposite. For example, the two conductive members 12 in lap joint connection may be connected to the positive electrode tab and the negative electrode tab of the two pouch battery cells 10, respectively, and the two conductive members 12 in lap joint connection may also be connected to two positive electrode tabs or two negative electrode tabs of the two cells, respectively.

In this embodiment, by setting two tabs protruding from both ends of the pouch battery cell 10 to have opposite polarities, the use requirements of the pouch battery cell 10 are satisfied, and the polarities of the two conductive members 12 in lap joint connection are the same or opposite, such that the plurality of pouch battery cells 10 can be flexibly connected and assembled as required.

In an embodiment of the present application, referring to FIGs. 11 and 12, a plurality of the battery cell sets are provided, and at least two of the battery cell sets are disposed in the third direction, where the conductive members 12 of two adjacent pouch battery cells 10 in the third direction are directly connected.

In this embodiment, a plurality of battery cell sets are disposed in the third direction, and the conductive members 12 of two adjacent pouch battery cells 10 in the third direction are directly connected. For example, if two battery cell sets are disposed in the third direction, the pouch battery cells 10 in the two battery cell sets are arranged adjacent to one another in the third direction. By taking two adjacent pouch battery cells 10 in two battery cell sets as an example, the conductive member 12 of one pouch battery cell 10 facing the other pouch battery cell 10 and the conductive member 12 of the other pouch battery cell 10 facing the pouch battery cell 10 are located on the same side of any pouch battery cell 10 in the third direction, and the two conductive members 12 of the two pouch battery cells 10 located on the same side in the third direction may extend along a straight line in the third direction and be in lap joint connection.

In this embodiment, by directly connecting the conductive members 12 of two adjacent pouch battery cells 10 in the third direction, the structure is simple and the connection is convenient and easy, such that the arrangement requirements of the partition plates 20 can be satisfied, and the steps and procedures of bending the conductive members 12 of two adjacent pouch battery cells 10 for connection during production or the number of the adapting pieces for connection can be well reduced, thereby making the production efficiency of the battery cell set higher during production and processing.

In some embodiments of the present application, the pouch battery cell 10 is any one of a lithium iron phosphate battery cell, a ternary battery cell, and a solid-state battery cell.

In this embodiment, the pouch battery cell 10 is any one of a lithium iron phosphate battery cell, a ternary battery cell, and a solid-state battery cell. The lithium iron phosphate battery cell has the advantages of high reliability, long cycle life, good high-temperature performance and the like; the ternary battery cell has the advantages of high energy density, fast charging and the like; and the solid-state battery cell has the advantages of high reliability, high energy density, long cycle life and the like, and for example, the solid-state battery cell may be a sulfide solid-state battery, an oxide solid-state battery, or a polymer solid-state battery, a composite solid-state electrolyte battery, a garnet-based solid-state battery, or the like.

In this embodiment, by setting the pouch battery cell 10 to be any one of a lithium iron phosphate battery cell, a ternary battery cell, and a solid-state battery cell, the pouch battery cell 10 can be flexibly set as different types of battery cells as required, such that the application scene of the pouch battery cell 10 is wider, thereby enabling the battery device 100 to better satisfy different use requirements.

In some embodiments of the present application, the pouch battery cell 10 is a lithium iron phosphate battery cell, and in a positive electrode material of the pouch battery cell 10, the usage ratio of a positive electrode active material, a binder, and a conductive agent is 96:1-3:1-3; the pouch battery cell 10 is a ternary battery cell, and in a positive electrode material of the pouch battery cell 10, the usage ratio of a positive electrode active material, a binder, and a conductive agent is 96:2-3:1-2.

It should be noted that the positive electrode of the pouch battery cell 10 may be a positive electrode plate, the positive electrode plate may include a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is arranged on any one or both of the two opposite surfaces of the positive electrode current collector.

As an example, a metal foil or a composite current collector may be used as the positive electrode current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material substrate and a metal layer. The composite current collector may be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when the pouch battery cell 10 of the embodiments of the present application is a lithium-ion battery, the positive electrode active material may include at least one of the following materials: phosphates, layered transition metal oxides, and respective modified compounds thereof; optionally, the positive electrode active material may include layered transition metal oxides and respective modified compounds thereof, which is beneficial to increasing the energy density of the pouch battery cell 10. However, the present application is not limited to these materials, and other traditional materials that can be used as positive electrode film layers for batteries may also be used. These positive electrode active materials may be used alone or in combination of two or more.

Examples of the phosphates may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

The layered transition metal oxide includes at least one of a compound having a general formula of LiaNibCocMdOeAf and a modified compound thereof. 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of a lithium cobalt oxide (such as LiCoO2), a lithium nickel oxide (such as LiNiO2), a lithium manganese oxide (such as LiMnO2 and LiMn2O4), a lithium nickel cobalt oxide, a lithium manganese cobalt oxide, a lithium nickel manganese oxide, a lithium nickel cobalt manganese oxide (such as LiNi1/3Co1/3Mn1/3O2 (also referred to as NCM333), LiNi0.5Co0.2Mn0.3O2 (also referred to as NCM523), LiNi0.5Co0.25Mn0.25O2 (also referred to NCM211), LiNi0.6Co0.2Mn0.2O2 (also referred to as NCM622), LiNi0.8Co0.1Mn0.1O2 (also referred to NCM811), LiNi0.9Co0.05Mn0.05O2 (also referred to Ni90)), a lithium nickel cobalt aluminum oxide (such as LiNi0.80Co0.15Al0.05O2), and modified compounds thereof.

In the embodiments of the present application, the modified compounds of the above positive electrode active materials may be obtained by doping modification and/or surface-coating modification of the positive electrode active materials, such as carbon-coating modification, and fast-ion-conductor coating modification.

The charging and discharging process of the pouch battery cell 10 will be accompanied by the deintercalation and consumption of active ions such as Li, and the molar content of Li is different when the pouch battery cell 10 is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charge-discharge cycles.

In the examples of the positive electrode active material listed in the embodiments of the present application, the molar content of oxygen O is only a theoretical value. The molar content of oxygen O will vary due to oxygen release from the crystal lattice, and actually, the molar content of oxygen O will fluctuate.

In the embodiments of the present application, the content of the element in the positive electrode active material has the meaning known in the art and can be detected by using devices and methods known in the art. For example, with reference to EPA 6010D-2014, the content can be determined by using a plasma atomic emission (ICP-OES, model: Thermo ICAP7400) through the inductively coupled plasma atomic emission spectrometry test. First, 0.4 g of a positive electrode active material is weighed, and 10 mL (50% concentration) aqua regia is added thereto. Then, the mixture is placed on a flat plate at 180 °C for 30 min. After digested on the flat plate, the mixture is adjusted to a volume of 100 mL and undergoes a quantitative measurement by using a standard curve method.

In some embodiments, the positive electrode may be made of a foam metal. The foam metal may be foam nickel, foam copper, foam aluminum, foam alloy, foam carbon, or the like. When the foam metal is used as the positive electrode, the surface of the foam metal may be not provided with the positive electrode film layer. Certainly, the positive electrode film layer may also be provided. As an example, the foam metal may also be filled or/and deposited with a lithium source material, a potassium metal, or sodium metal; the lithium source material is a lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate. In some embodiments, the mass percentage of the positive electrode binder in the positive electrode film layer is ≤ 5 wt%.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

As an example, the negative electrode current collector may be made of metal foil, foam metal, or composite current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector may be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, the negative electrode active material may be a negative electrode active material known in the art for use in the pouch battery cell 10. As an example, the negative electrode active material may include at least one of the following materials: a carbon material (e.g., at least one of artificial graphite, natural graphite, soft carbon, and hard carbon), a silicon-based material, a tin-based material, a lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that can be used as negative electrode film layers for batteries may also be used. These negative electrode film layers may be used alone or in combination of two or more.

In some embodiments, the negative electrode active material includes elemental silicon, which may be present in the form of a silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cell 10 can be increased.

In some embodiments, the mass content of the silicon element in the negative electrode film layer is 1 wt% to 32 wt%, optionally 2 wt% to 19 wt%, and further optionally 6 wt% to 13 wt%. Under the system of the pouch battery cell 10, when the mass content of the silicon element is within the above range, the energy density of the pouch battery cell 10 can be increased.

In the embodiments of the present application, the mass content of the silicon element in the negative electrode film layer has the meaning known in the art and can be detected by using devices and methods known in the art. For example, by soaking the negative electrode plate in a solvent such as water to separate the negative electrode active material from the negative electrode current collector, performing the suction filtration to obtain the negative electrode active material, using the inductively coupled plasma optical emission spectrometer, with the model ICAP7400, of Thermo Fisher Scientific Inc., USA, to conduct detection on the negative electrode active material, and referring to the GB/T30902-2014 standard, the mass content of the silicon element can be obtained.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage of the negative electrode binder in the negative electrode film layer is ≤ 5%.

In some embodiments, the negative electrode film layer further optionally includes other auxiliary agents. As an example, other auxiliary agents may include thickeners, such as sodium carboxymethylcellulose (CMC-Na) and PTC thermistor materials. In some embodiments, the mass percentage of other auxiliary agents in the negative electrode film layer is ≤ 2 wt%.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the material of the separation film may include one or more of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the separation film may include a porous base film and a coating layer disposed on at least one side of the porous base film, and the coating layer may include at least one of inorganic particles or organic particles.

The porous base film may include one or more of polyethylene and polypropylene.

The inorganic particles have better heat resistance, and can improve the integral heat resistance of the separation film. When within the operating voltage range of the sodium-ion battery, the inorganic particles basically do not undergo oxidation reaction and reduction reaction with metal dendrites. In other words, the inorganic particles are configured to not undergo oxidation reaction and reduction reaction with the alkali metal and/or alkaline earth metal at a nominal voltage of the sodium-ion battery.

In some embodiments, the inorganic particles include one or more of boehmite γ-AlOOH, aluminum oxide Al2O3, aluminum hydroxide Al(OH)3, barium sulfate BaSO4, magnesium oxide MgO, magnesium hydroxide Mg(OH)2, calcium oxide CaO, cerium oxide CeO2, zirconium titanate SrTiO3, barium titanate BaTiO3, and magnesium fluoride MgF2.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

In some embodiments, the pouch battery cell 10 further includes an electrolytic solution.

During the charging and discharging process of the battery cell, active ions are intercalated and intercalated back and forth between the positive electrode plate and the negative electrode plate, and the electrolytic solution serves to conduct the active ions between the positive electrode plate and the negative electrode plate. The embodiments of the present application do not particularly limit the type of the electrolytic solution, and can be selected according to actual requirements.

The electrolytic solution includes an electrolyte salt and a solvent. The types of the electrolyte salt and the solvent are not particularly limited, and a choice can be made according to actual requirements.

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

For example, the additive includes at least one of a cyclic carbonate compound containing unsaturated bonds, a sulfate ester compound, a sulfite ester compound, a sultone compound, a disulfonic acid compound, a nitrile compound, an aromatic compound, an isocyanic acid compound, a phosphazene compound, an acid anhydride, a cyclic acid anhydride compound, a phosphite ester compound, a phosphate ester compound, a borate ester, and a carboxylate ester compound.

In this embodiment, when the pouch battery cell 10 is set as a lithium iron phosphate battery cell, in the positive electrode material of the pouch battery cell 10, the usage ratio of a positive electrode active material, a binder, and a conductive agent is 96:1-3:1-3. For example, the usage ratio of the three may be 96:1:1, 96:1.2:2.3, 96:1.5:3, 96:2:1.3, 96:2.2:2, 96:2.6:3, 96:3:1, or the like. Optionally, the positive electrode active material is lithium iron phosphate, the binder is polyvinylidene fluoride, the conductive agent is conductive graphite, and the usage ratio of the positive electrode active material, the binder, and the conductive agent may be 96:2:2.

In this embodiment, when the pouch battery cell 10 is set as a ternary battery cell, in the positive electrode material of the pouch battery cell 10, the usage ratio of a positive electrode active material, a binder, and a conductive agent is 96:2-3:1-2. For example, the usage ratio of the three may be 96:2:1.3, 96:2.1:1.5, 96:2.1:1.5, 96:2.5:1.5, 96:2.6:1.8, 96:3:1, 96:3:2, or the like. Optionally, the ternary battery cell may be eight-series nickel chromium lithium manganate LiNi0.8Co0.1Mn0.1O2, where the usage ratio of the positive electrode active material, the binder, and the conductive agent may be 96:2.5:1.5.

In this embodiment, the pouch battery cell 10 is set as a lithium iron phosphate battery cell, and the usage ratio of the electrode active material, the binder, and the conductive agent is 96:1-3:1-3, or the pouch battery cell 10 is set as a ternary battery cell, and in the positive electrode material of the pouch battery cell 10, the usage ratio of the positive electrode active material, the binder, and the conductive agent is 96:2-3:1-2, such that the pouch battery cell 10 can have a higher energy density, and the electrode structure stability and reliability is better, thus well reducing the probability of detachment and delamination of the active material in the charge and discharge process. This can ensure that the pouch battery cell 10 has a longer cycle life, and the internal resistance of the electrode is reduced, and the pouch battery cell 10 can have better charge-discharge efficiency and power density.

In an embodiment of the present application, the pouch battery cell 10 is a ternary battery cell, the battery device 100 further includes a shell, the plurality of pouch battery cells 10 are received in the shell, and in the second direction, the shell is provided with a pressure relief area.

In this embodiment, the pouch battery cell 10 is set as a ternary battery cell, the battery cell set is provided with a shell, and the shell houses a plurality of pouch battery cells 10, where one side of the shell facing the pouch battery cells 10 in the second direction is provided with a pressure relief area. Illustratively, one side of the pouch battery cells 10 facing the shell in the second direction may be provided with a pressure relief structure, and the pressure relief structure may be opposite to the pressure relief area. When the pouch battery cells 10 are in thermal runaway, high-temperature gas may escape from the pressure relief area of the shell.

The pressure relief area may be a pressure relief hole, a pressure relief score, a weakened part, or the like. The shell may be made of metal or non-metal, the metal may include, but is not limited to, aluminum alloy, stainless steel, iron, etc., and the non-metal may be, but is not limited to, plastic, composite material, etc. Illustratively, the shell may house some of the plurality of pouch battery cells 10 in the battery cell set. For example, a single shell may house two, three or four pouch battery cells 10 disposed adjacently, and the battery cell set may house all of the pouch battery cells 10 by arranging a plurality of shells in the first direction.

In this embodiment, the battery cell set is provided with a shell, which can provide mechanical protection outside a plurality of pouch battery cells 10, thereby reducing the risk that the pouch battery cells 10 are damaged by external mechanical impact, better fixing the positions of the pouch battery cells 10, and reducing the probability of displacement of the pouch battery cells 10 inside the case body 60, thus contributing to improving the installation reliability of the pouch battery cells 10 inside the case body 60.

In this embodiment, the shell is provided with a pressure relief area in the second direction, such that the pouch battery cells 10 in the battery cell set can stably and reliably perform directional pressure relief when thermal runaway occurs, thereby well reducing the risk of explosion of the battery cell set and making the operation of the battery cell set more stable and reliable.

In an embodiment of the present application, referring to FIG. , the shell may include a first shell wall, a second shell wall, and a third shell wall, where the second shell wall and the third shell wall are connected at both ends of the first shell wall in the first direction, and a first opening is formed between the second shell wall and the third shell wall.

By arranging the shell to include the first shell wall, the second shell wall and the third shell wall, the whole shell may be U-shaped. By adopting this shape design, the pouch battery cells 10 can easily enter or be taken out of the first opening. During the composition of the battery device 100, an assembler may slide the pouch battery cells 10 into the first opening of the U-shaped shell, which is simpler and faster than the completely closed shell structure. Moreover, when the pouch battery cells 10 need to be maintained, overhauled or replaced, the pouch battery cells 10 can be taken out of the shell more conveniently. For example, in the production line of the battery device 100, such a structure of the shell can improve the installation efficiency and reduce the assembly cost.

The case with the above structure may also better fit the shape of the pouch battery cells 10, the pouch battery cells 10 are usually flat, and the U-shaped shell can closely surround most of the surfaces of the pouch battery cells 10. The first shell wall and the second shell wall of the shell may replace part of the partition plates 20 for support as required, which can effectively utilize the space inside the case body 60 while ensuring good protection for the pouch battery cells 10, which is very important for increasing the energy density of the battery device 100. For example, in designing a more compact battery device 100, the U-shaped shell allows the pouch battery cells 10 to be disposed in a more reasonable layout, and more pouch battery cells 10 can be packed in a limited case body 60, thereby increasing the total capacity of the battery device 100.

In the above technical solutions, the shell is arranged into the above structure, which is convenient for the assembly of the battery cell set, thus contributing to improving the assembly efficiency and reducing the cost, and also contributing to the subsequent maintenance and reducing the use cost. Moreover, the space occupation inside the case body 60 can be reduced while better binding a plurality of pouch battery cells 10, which is beneficial to improving the compactness of the space layout inside the battery device 100 and further increasing the energy density of the battery device 100.

In some embodiments of the present application, referring to FIG. 6, the battery device 100 may further include a case body 60, where the case body 60 is provided with a mounting cavity, and the battery cell set is arranged in the mounting cavity.

In this embodiment, the battery device 100 includes a case body 60. Illustratively, the case body 60 may include a first case body and a second case body, where the first case body and the second case body are buckled, such that a closed space is formed inside the case body 60 to receive the battery cell set. Here, the "closed" means to cover or close, which may be sealed or unsealed. Where, the first case body may be a top cover or a bottom plate.

As an example, the case body 60 may include a top cover, a frame, and a bottom plate, where the top cover and the bottom plate are respectively connected with the frame, such that a closed space is formed inside the case body 60 to receive the battery cell set. In some embodiments, the case body 60 may be a part of the chassis structure of the vehicle. For example, a part of the case body 60 may become at least a part of the floor of the vehicle, or a part of the case body 60 may become at least a part of the crossbeam and the longitudinal beam of the vehicle.

Other configurations and operations of the battery device 100 of this embodiment are known to those of ordinary skill in the art and will not be described in detail herein.

An energy storage device according to embodiments of a third aspect of the present application is described below with reference to FIGs. 1 to 16.

As shown in FIGs. 1 to 16, provided is an energy storage device according to embodiments of the present application, which includes: a power conversion device and the battery device 100 according to the embodiments of the second aspect of the present application, the battery device 100 being configured to store or provide electric energy.

Other configurations and operations of the energy storage device according to the embodiments of the present application are known to those of ordinary skill in the art and will not be described in detail herein.

According to the energy storage device of the embodiments of the present application, by arranging the battery device 100 of the embodiments of the second aspect, and by setting the thickness of the film shell 11 to be less than 0.2 mm, and the first dimension to be greater than or equal to 5 mm and less than or equal to 70 mm, the pouch battery cell 10 has larger thickness and the wall thickness of the film shell 11 is smaller, such that the pouch battery cell 10 can have a higher energy density. Meanwhile, the ratio of the second dimension of any film part 111 to the first dimension is greater than or equal to 0.4 and less than or equal to 0.6, such that the two film parts 111 of the film shell 11 have similar or same dimension structure and structural performance, so as to enable the two film parts 111 to have more balanced bearing capacity for stress and the like generated in the accommodating cavity, and make the overall structure of the film shell 11 more stable and the structural performance such as mechanical strength better. This can ensure that the film shell 11 can well satisfy the supporting and protecting requirements of the pouch battery cell 10 under the condition that the wall thickness is less than or equal to 0.2 mm, such that the energy density of the pouch battery cell 10 can be stably and reliably increased, further reducing the arrangement number of structural components of support, heat conduction and the like in the battery device 100, and enlarging the arrangement space of the pouch battery cells 10 in the battery device 100, thereby well increasing the overall energy density of the battery device 100.

An electric device 1000 according to embodiments of a fourth aspect of the present application is described below with reference to FIGs. 1 to 16.

As shown in FIGs. 1 to 16, provided is an electric device 1000 according to embodiments of the present application, which includes the battery device 100 according to the embodiments of the second aspect of the present application or the energy storage device according to the embodiments of the third aspect of the present application, the battery device 100 being configured to store or provide electric energy.

Other configurations and operations of the electric device 1000 according to the embodiments of the present application are known to those of ordinary skill in the art and will not be described in detail herein.

According to the electric device 1000 of the embodiments of the present application, by arranging the battery device 100 of the embodiments of the second aspect or the energy storage device of the embodiments of the third aspect, and by setting the thickness of the film shell 11 to be less than 0.2 mm, and the first dimension to be greater than or equal to 5 mm and less than or equal to 70 mm, the pouch battery cell 10 has larger thickness and the wall thickness of the film shell 11 is smaller, such that the pouch battery cell 10 can have a higher energy density. Meanwhile, the ratio of the second dimension of any film part 111 to the first dimension is greater than or equal to 0.4 and less than or equal to 0.6, such that the two film parts 111 of the film shell 11 have similar or same dimension structure and structural performance, so as to enable the two film parts 111 to have more balanced bearing capacity for stress and the like generated in the accommodating cavity, and make the overall structure of the film shell 11 more stable and the structural performance such as mechanical strength better. This can ensure that the film shell 11 can well satisfy the supporting and protecting requirements of the pouch battery cell 10 under the condition that the wall thickness is less than or equal to 0.2 mm, such that the energy density of the pouch battery cell 10 can be stably and reliably increased, further reducing the arrangement number of structural components of support, heat conduction and the like in the battery device 100, and enlarging the arrangement space of the pouch battery cells 10 in the battery device 100, thereby well increasing the overall energy density of the battery device 100.

An electric device 1000 according to a specific embodiment of the present application is described below with reference to FIGs. 1 to 16.

As shown in FIGs. 1 to 16, the electric device 1000 in this embodiment includes a motor 200, a controller 300, and a battery device 100, the controller 300 being configured to control the battery device 100 to supply power to the motor 200.

The battery device 100 includes a case body 60, a battery cell set, partition plates 20, buffer members 30, and a heat exchange plate 50. The case body 60 is provided with a mounting cavity, and the heat exchange plate 50 may be arranged in the mounting cavity and located at the bottom of the mounting cavity in the second direction. Two battery cell sets are provided, and the two battery cell sets are arranged in the mounting cavity and disposed in the third direction, and the battery cell sets are adhesively connected and fixed to a first water-cooling bottom plate by a heat conduction adhesive.

The battery cell set includes a plurality of pouch battery cells 10 disposed in the first direction, and the pouch battery cells 10 in the two battery cell sets are the same in quantity and are disposed in the third direction. In the first direction, both ends of the battery cell set are respectively provided with partition plates 20, and the partition plates 20 are arranged within the arrangement range of two battery cell sets in the third direction, and one partition plate 20 is arranged after every two pouch battery cells 10 in the first direction, and a buffer member 30 is arranged between two pouch battery cells 10 between two adjacent partition plates 20. The buffer member 30 abuts against the two pouch battery cells 10, and the partition plate 20 is adhesively connected and fixed to the adjacent pouch battery cells 10.

The pouch battery cell 10 includes a film shell 11, an electrode assembly, and conductive members 12. The film shell 11 includes two film parts 111, and a shell structure is formed by folding the two film parts 111 in half and hot-pressing the sealing edges 1111. An accommodating groove is formed in the film part 111. The film part 111 includes a sealing edge 1111, a side wall 1112 and a bottom wall 1113 which are sequentially connected in the first direction. The sealing edges 1111 of the two film parts 111 are integrated by hot pressing, and a sealing edge boss 1101 is formed by folding the sealing edge 1111 of the film shell 11 on one side in the second direction. The electrode assembly is arranged in the accommodating cavity, the positive electrode tab and the negative electrode tab of the electrode assembly are respectively connected to two conductive members 12, the two conductive members 12 are respectively arranged on both sides of the pouch battery cell 10 in the third direction, and the conductive members 12 extend out of the film shell 11 from the accommodating cavity in the third direction. The extended part is formed as a lead-out part, and the lead-out part is in a sheet shape.

In another embodiment of the pouch battery cell 10 of the present application, the battery device 100 may further include a shell. The shell is a U-shaped shell and includes a first shell wall, a second shell wall and a third shell wall. The first shell wall is arranged on one side of the battery cell set facing away from the heat exchange plate 50 in the second direction, the second shell wall and the third shell wall are respectively connected at both ends of the first shell wall in the first direction and arranged between adjacent pouch battery cells 10, and the second shell wall and the third shell wall may replace part of the partition plates 20. A plurality of shells jointly strengthen and support the structure of the battery cell sets, such that the overall structure of the battery cell sets is more stable and compact, and the assembly of the battery cell sets is convenient, which is beneficial to improving the assembly efficiency and reducing the cost.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A pouch battery cell, comprising:
a film shell (11), wherein a wall thickness of the film shell (11) is less than or equal to 0.2 mm, the film shell (11) comprises two film parts (111) connected in a first direction, both of the film parts (111) define an accommodating groove, and the accommodating grooves of the two film parts (111) are formed opposite to each other in the first direction and jointly form an accommodating cavity of the film shell (11); and
an electrode assembly, arranged in the accommodating cavity,
wherein, a dimension of the pouch battery cell in the first direction is a first dimension, and a dimension of any of the film parts (111) in the first direction is a second dimension, the first dimension being greater than or equal to 5 mm and less than or equal to 70 mm, and a ratio of the second dimension to the first dimension is greater than or equal to 0.4 and less than or equal to 0.6.

2. The pouch battery cell according to claim 1, wherein the ratio of the second dimension to the first dimension is greater than or equal to 0.45 and less than or equal to 0.55.

3. The pouch battery cell according to claim 2, wherein the ratio of the second dimension to the first dimension is 0.5.

4. The pouch battery cell according to any one of claims 1 to 3, wherein the first dimension is greater than or equal to 15 mm and less than or equal to 45 mm.

5. The pouch battery cell according to any one of claims 1 to 4, wherein the second dimension is greater than or equal to 3 mm and less than or equal to 35 mm.

6. The pouch battery cell according to claim 5, wherein the second dimension is greater than or equal to 7 mm and less than or equal to 22 mm.

7. The pouch battery cell according to any one of claims 1 to 6, wherein the film part (111) comprises: a sealing edge (1111), a side wall (1112) and a bottom wall (1113), wherein the sealing edge (1111) and the bottom wall (1113) are arranged at an interval in the first direction, the side wall (1112) extends in an annular shape along a circumferential direction of the bottom wall (1113), one end of the side wall (1112) in the first direction is connected to a peripheral edge of the bottom wall (1113) and the other end extends to be connected to the sealing edge (1111) in the first direction, the sealing edge (1111), the side wall (1112) and the bottom wall (1113) jointly enclose an accommodating groove opening on one side in the first direction, and the electrode assembly is at least partially arranged in the accommodating groove.

8. The pouch battery cell according to claim 7, wherein the side wall (1112) comprises a first arc segment (11121), a straight line segment (11122) and a second arc segment (11123) sequentially connected in the first direction, wherein the straight line segment (11122) extends along a straight line in the first direction, the straight line segment (11122) is arc-connected with the sealing edge (1111) through the first arc segment (11121), and the straight line segment (11122) is arc-connected with the bottom wall (1113) through the second arc segment (11123).

9. The pouch battery cell according to claim 8, wherein a dimension of the straight line segment (11122) in the first direction is a third dimension, and a ratio of the third dimension to the second dimension is greater than or equal to 0.6 and less than or equal to 0.9.

10. The pouch battery cell according to claim 9, wherein the ratio of the third dimension to the second dimension is greater than or equal to 0.7 and less than or equal to 0.85.

11. The pouch battery cell according to any one of claims 8 to 10, wherein the dimension of the straight line segment (11122) in the first direction is the third dimension, and the third dimension is greater than or equal to 5 mm and less than or equal to 30 mm.

12. The pouch battery cell according to claim 11, wherein the third dimension is greater than or equal to 7 mm and less than or equal to 18 mm.

13. The pouch battery cell according to any one of claims 8 to 12, wherein a radius of the first arc segment (11121) is greater than or equal to 1.5 mm, and a radius of the second arc segment (11123) is greater than or equal to 1.5 mm.

14. The pouch battery cell according to any one of claims 1 to 13, wherein a width dimension of the pouch battery cell in a second direction is less than or equal to 200 mm, and/or a length dimension of the pouch battery cell in a third direction is less than or equal to 650 mm, the third direction intersecting both the second direction and the first direction.

15. The pouch battery cell according to any one of claims 1 to 6, wherein a sealing edge boss (1101) is formed on an end surface of at least one end of the film shell (11) in a second direction, and the sealing edge boss (1101) is configured to be formed by folding sealing edges (1111) of the two film parts (111), the second direction intersecting the first direction.

16. The pouch battery cell according to claim 15, wherein a bulge height of the sealing edge boss (1101) in the second direction is less than or equal to 0.5 mm.

17. The pouch battery cell according to any one of claims 1 to 16, wherein both ends of the pouch battery cell in the third direction are respectively provided with conductive members (12), and the conductive members (12) are electrically connected with the electrode assembly and are at least partially exposed outside the film shell (11), the third direction intersecting the first direction.

18. The pouch battery cell according to claim 17, wherein a part of the conductive member (12) exposed outside the film shell (11) is a lead-out part, and the lead-out part is formed in a sheet shape.

19. The pouch battery cell according to claim 18, wherein rounded corners are respectively formed on end surfaces of both sides of the lead-out part in the second direction and an end surface of the lead-out part at one end facing away from the electrode assembly in the third direction.

20. The pouch battery cell according to any one of claims 17 to 19, wherein the part of the conductive member (12) exposed outside the film shell (11) is the lead-out part, and the lead-out part is of a flexible structure.

21. The pouch battery cell according to any one of claims 17 to 20, wherein the part of the conductive member (12) exposed outside the film shell (11) is the lead-out part, and a thickness of the lead-out part is 0.1 mm to 0.5 mm.

22. The pouch battery cell according to any one of claims 17 to 21, wherein the part of the conductive member (12) exposed outside the film shell (11) is the lead-out part, and a width dimension of the lead-out part in the second direction is 20 mm to 60 mm.

23. The pouch battery cell according to any one of claims 17 to 22, wherein the part of the conductive member (12) exposed outside the film shell (11) is the lead-out part, and a length dimension of the lead-out part in the third direction is 10 mm to 50 mm.

24. A battery device, comprising battery cell sets, wherein each battery cell set comprises a plurality of the pouch battery cells stacked in the first direction, and the pouch battery cells are the pouch battery cell according to any one of claims 1 to 23.

25. The battery device according to claim 24, further comprising:
a heat exchange plate (50), the heat exchange plate (50) being arranged on at least one side of the plurality of pouch battery cells in the second direction, and being configured to exchange heat with the plurality of pouch battery cells, the second direction intersecting the first direction.

26. The battery device according to claim 25, wherein a surface of the film shell (11) on one side facing the heat exchange plate (50) in the second direction is planar and is connected to the heat exchange plate (50) by a heat conduction adhesive or a heat conduction pad.

27. The battery device according to claim 25, wherein the sealing edge boss (1101) is formed on one side of the film shell (11) in the second direction,
and the battery device further comprises: an adhesive layer (40), the adhesive layer (40) being adhesively connected between the heat exchange plate (50) and the pouch battery cells, wherein in the second direction, a height of the adhesive layer (40) is greater than the bulge height of the sealing edge boss (1101).

28. The battery device according to any one of claims 25 to 27, wherein the battery device further comprises: the adhesive layer (40), the adhesive layer (40) being adhesively connected between the heat exchange plate (50) and the pouch battery cells, and a part of the adhesive layer (40) being configured to overflow between two adjacent pouch battery cells in the first direction to adhesively connect the two adjacent pouch battery cells.

29. The battery device according to claim 24, wherein the battery device further comprises a bottom plate and an adhesive layer (40), the bottom plate is located on one side of the battery cell set in the second direction, the battery cell set is adhesively connected with the bottom plate through the adhesive layer (40), a surface of the pouch battery cell on one side facing the adhesive layer (40) is a first surface, two side surfaces of the pouch battery cell in the first direction are both second surfaces, and the first surface is in chamfer connection to the two second surfaces; wherein the battery device further comprises blocking members, each blocking member is arranged at a chamfer, and the blocking member is configured to block the adhesive layer (40) located at the chamfer from overflowing to a position where the second surface is located.

30. The battery device according to claim 29, wherein one blocking member is arranged between two adjacent pouch battery cells in the first direction.

31. The battery device according to claim 29, wherein the blocking member is a foam member and is adhesively connected to the bottom plate.

32. The battery device according to claim 29, wherein the blocking member is an adhesive member, and the adhesive member is adhesively connected to one end of the pouch battery cell facing the bottom plate.

33. The battery device according to any one of claims 24 to 32, wherein the plurality of pouch battery cells are disposed in a stacked manner in the first direction,
and the battery device further comprises partition plates (20), a hardness of the partition plates (20) is higher than a hardness of the film shell (11), a plurality of the partition plates (20) are provided, the plurality of partition plates (20) are disposed at intervals in the first direction, and at least two of the pouch battery cells are disposed between two adjacent partition plates (20).

34. The battery device according to claim 33, wherein the number of the pouch battery cells sequentially disposed between two adjacent partition plates (20) in the first direction is less than or equal to four.

35. The battery device according to claim 33, wherein the pouch battery cells extend in the third direction, the third direction is a length direction of the pouch battery cell, a length direction of the partition plate (20) extends in the length direction of the pouch battery cell, and a length of the partition plate (20) is greater than 80% of a length of the pouch battery cell.

36. The battery device according to any one of claims 33 to 35, wherein a plurality of the battery cell sets are provided, at least two of the battery cell sets are disposed in the third direction,
and the length of the partition plate (20) is more than twice the length of the pouch battery cell, such that two adjacent battery cell sets disposed in the length direction of the pouch battery cells share one partition plate (20).

37. The battery device according to any one of claims 33 to 36, wherein a thickness of the partition plate (20) in the first direction is less than the thickness of the pouch battery cell, and a width of the partition plate (20) in the second direction is greater than 80% of a width of the pouch battery cell.

38. The battery device according to any one of claims 33 to 37, wherein the thickness of the partition plate (20) in the first direction is 0.8 mm to 2.0 mm.

39. The battery device according to any one of claims 33 to 38, wherein the partition plate (20) is an aluminum plate, an aluminum alloy plate, a copper plate, or a steel plate.

40. The battery device according to any one of claims 33 to 39, wherein the partition plate (20) is of a solid structure.

41. The battery device according to any one of claims 33 to 40, wherein the partition plate (20) is a heat conducting member and is thermally connected to the film shell (11).

42. The battery device according to any one of claims 33 to 41, wherein a heat exchange flow channel is formed in the partition plate (20).

43. The battery device according to any one of claims 33 to 42, wherein the partition plate (20) is adhesively connected to the adjacent pouch battery cells.

44. The battery device according to any one of claims 33 to 43, wherein the partition plate (20) is adhesively connected and fixed to the adjacent pouch battery cells by a double-sided adhesive tape.

45. The battery device according to any one of claims 33 to 44, wherein a buffer member (30) is arranged between at least two adjacent pouch battery cells in the first direction, and a hardness of the buffer member (30) is less than a hardness of the film shell (11).

46. The battery device according to claim 45, wherein the buffer member (30) and the partition plate (20) are simultaneously arranged between at least two adjacent pouch battery cells in the first direction.

47. The battery device according to claim 45, wherein at most one of the buffer member (30) and the partition plate (20) is arranged between any two adjacent pouch battery cells in the first direction.

48. The battery device according to any one of claims 45 to 47, wherein at least one of the pouch battery cells is interposed between the buffer member (30) and the partition plate (20) in the first direction.

49. The battery device according to claim 48, wherein one of the buffer member (30) and the partition plate (20) is arranged between any two adjacent pouch battery cells in the first direction, and the buffer members (30) and the partition plates (20) in the battery cell set are alternately arranged in the first direction.

50. The battery device according to any one of claims 45 to 49, wherein the buffer member (30) covers 80% or more of a surface area of a thickness side of the pouch battery cell.

51. The battery device according to claim 24, wherein both ends of the pouch battery cell in the third direction are respectively provided with the conductive members (12), the conductive members (12) are electrically connected with the electrode assembly and at least partially exposed outside the film shell (11), and the conductive members (12) on the same side of two adjacent pouch battery cells in the battery cell set are connected.

52. The battery device according to claim 51, wherein the battery cell set comprises at least three of the pouch battery cells, and the pouch battery cell located between two adjacent pouch battery cells in the battery cell set is an intermediate battery cell; of two conductive members (12) at both ends of the intermediate battery cell, one of the conductive members (12) is connected to the conductive member (12) on the same side of one pouch battery cell adjacent to the intermediate battery cell, and the other conductive member (12) is connected to the conductive member (12) on the same side of the other pouch battery cell adjacent to the intermediate battery cell.

53. The battery device according to claim 51, wherein two of the conductive members (12) forming a connection are in lap joint connection, and at least one of the conductive members (12) is in a bent shape.

54. The battery device according to claim 51, wherein two of the conductive members (12) forming a connection are connected by an adapting piece (70), and the adapting piece (70) is in a bent shape.

55. The battery device according to claim 51, wherein a joint is in a bent shape, and the bent shape is U-shaped.

56. The battery device according to any one of claims 51 to 55, wherein two tabs protruding from both ends of the pouch battery cell have opposite polarities, and the two conductive members (12) in lap joint connection have the same or opposite polarities.

57. The battery device according to any one of claims 51 to 56, wherein a plurality of the battery cell sets are provided, and at least two of the battery cell sets are disposed in the third direction,
wherein the conductive members (12) of two adjacent pouch battery cells in the third direction are directly connected.

58. The battery device according to claim 24, wherein the pouch battery cell is any one of a lithium iron phosphate battery cell, a ternary battery cell, and a solid-state battery cell.

59. The battery device according to claim 58, wherein the pouch battery cell is a ternary battery cell, the battery device further comprises a shell, the plurality of pouch battery cells are received in the shell, and in the second direction, the shell is provided with a pressure relief area.

60. An energy storage device, comprising: a power conversion device and the battery device according to any one of claims 24 to 59, the battery device being configured to store or provide electric energy.

61. An electric device, comprising the battery device according to any one of claims 24 to 59 or the energy storage device according to claim 60, the battery device being configured to store or provide electric energy.
